(19) Europäisches Patentamt
European Patent Office
Office européen des brevets

(11) EP 1 218 460 B2

(12) # NEUE EUROPÄISCHE PATENTSCHRIFT

(45) Veröffentlichungstag und Bekanntmachung des Hinweises auf die Entscheidung über den Einspruch:
**02.05.2007 Patentblatt 2007/18**

(45) Hinweis auf die Patenterteilung:
**30.07.2003 Patentblatt 2003/31**

(21) Anmeldenummer: **00960566.8**

(22) Anmeldetag: **31.08.2000**

(51) Int Cl.:
***C09D 175/04*** *(2006.01)* ***C08G 18/08*** *(2006.01)*
***C08G 18/66*** *(2006.01)* ***C09D 7/00*** *(2006.01)*

(86) Internationale Anmeldenummer:
**PCT/EP2000/008503**

(87) Internationale Veröffentlichungsnummer:
**WO 2001/021720 (29.03.2001 Gazette 2001/13)**

(54) **VERWENDUNG VON ASSOZIATIVEN VERDICKUNGSMITTELN AUF POLYURETHANBASIS UND/ODER VON DIPROPYLENGLYKOLMONOALKYLETHERN IN FARB- UND/ODER EFFEKTGEBENDEN MEHRSCHICHTLACKIERUNGEN**

USE OF ASSOCIATIVE THICKENERS BASED ON POLYURETHANE AND/OR DIPROPYLENE GLYCOL MONOALKYL ETHERS IN COLOURED AND/OR DECORATIVE EFFECT MULTI-LAYERED LACQUERS

UTILISATION D'AGENTS EPAISSISSANTS ASSOCIATIFS SUR UNE BASE POLYURETHANE ET/OU DE DIPROPYLENGLYCOL MONOALKYL ETHERS DANS DES PEINTURES MULTICOUCHES DE COLORATION ET/OU A EFFETS

(84) Benannte Vertragsstaaten:
**AT BE CH CY DE DK ES FI FR GB GR IE IT LI LU MC NL PT SE**

(30) Priorität: **23.09.1999 DE 19945574**

(43) Veröffentlichungstag der Anmeldung:
**03.07.2002 Patentblatt 2002/27**

(73) Patentinhaber: **BASF Coatings AG**
**48165 Münster (DE)**

(72) Erfinder:
- **MANGELS, Ines**
**48165 Münster (DE)**
- **JOSTEN, Karl-Heinz**
**97209 Veitshöchheim (DE)**
- **NENNER, Udo**
**97877 Werfheim (DE)**
- **WEGNER, Egon**
**97209 Veitshöchheim (DE)**
- **SAPPER, Ekkehard**
**97222 Rimpar (DE)**
- **ZARSE, Nicola**
**48165 Münster (DE)**

(74) Vertreter: **Leifert, Elmar**
**Leifert & Steffan**
**Burgplatz 21-22**
**40213 Düsseldorf (DE)**

(56) Entgegenhaltungen:

| | |
|---|---|
| EP-A- 0 302 240 | EP-A- 0 791 024 |
| EP-A- 0 905 157 | WO-A-99/03595 |
| DE-A- 4 415 292 | US-A- 5 612 408 |
| US-A- 5 739 194 | US-A- 5 955 063 |

- **DATABASE WPI Section Ch, Week 199418 Derwent Publications Ltd., London, GB; Class A14, AN 1994-148117 XP002156545 & JP 06 093234 A (DAINIPPON INK & CHEM KK) , 5. April 1994 (1994-04-05)**
- **Calbo L.J, Handbook of Coatings Additives, vol. 2,1992, Marcel Dekker Inc, S.105-109, 129 und 130**
- **C.J.K.Fox, Formulating waterborne industrial coatings with P-series glycolethers.Paintindia, 1997**
- **Organic Coatings, Science and Technoloy, Second Edition, Z.W.Wichs, F.N. Jones, and S.P. Pappas, Wiley-Interscience (199) pp.433-439**



Printed by Jouve, 75001 PARIS (FR)

## Beschreibung

Die vorliegende Erfindung betrifft die Verwendung von assoziativen Verdickungsmitteln auf Polyurethanbasis und/oder von Dipropylenglykolmonoalkylethern zur Unterdrückung optischer Fehlstellen in farb- und/oder effektgebenden Mehrschichtlackierungen oder deren Reparaturlackierungen. Außerdem betrifft die vorliegende Erfindung neue Wasserbasislacke, die mindestens ein assoziatives Verdickungsmittel auf Polyurethanbasis und/oder mindestens einen Dipropylenglykolmonoalkylether enthalten. Des weiteren betrifft die vorliegende Erfindung die Verwendung der neuen Wasserbasislacke für die Herstellung farb- und/oder effektgebender Mehrschichtlackierungen und deren Reparaturlackierungen.

Wegen ihrer zahlreichen vorteilhaften Eigenschaften werden heutzutage in vielen Bereichen, beispielsweise in der Beschichtung von Kraftfahrzeugkarosserien, industriellen Bauteilen, inklusive elektrotechnische Bauteile, Coils und Emballagen, und Stoffen oder Möbeln, farb- und/oder effektgebende Mehrschichtlackierungen angewandt. Wegen der besonders hohen Ansprüche der Hersteller von Automobilen und deren Kunden haben sich diese farb- und/oder effektgebende Mehrschichtlackierungen insbesondere auf diesem Anwendungsgebiet durchgesetzt.

Bekanntermaßen werden heutzutage die Karosserien von Automobilen mit einer mehrschichtigen Lackierung, bestehend aus einer Grundierung, insbesondere einer Elektrotauchlackierung, einem Füller oder einer Steinschlagschutzgrundierung und einer farb- und/oder effektgebenden Mehrschichtlackierung beschichtet. Die Mehrschichtlackierung selbst besteht im allgemeinen aus mindestens einer Basislackierung und mindestens einer Klarlackierung. Vorteilhafterweise wird die Basislackierung aus einem Wasserbasislack hergestellt. Nach dem besonders vorteilhaften Naß-in-naß-Verfahren wird der Wasserbasislack auf den Füller oder die Steinschlagschutzgrundierung appliziert und angetrocknet, indes nicht vernetzt. Danach wird auf die nicht ausgehärtete Wasserbasislackschicht mindestens eine Klarlackschicht appliziert und zusammen mit der Wasserbasislackschicht ausgehärtet. Dieses Verfahren wird auch bei der Reparaturlackierung der farbund/oder effektgebenden Mehrschichtlackierungen angewandt.

Sowohl bei der Herstellung der farb- und/oder effektgebenden Mehrschichtlackierungen als auch bei der Reparatur hierin befindlicher Fehlstellen kann es zu optischen Fehlstellen kommen, die sich störend bemerkbar machen und zu Reklamationen Anlaß geben. Diese optischen Fehlstellen können unterschiedliche Ursachen haben.

So werden Fehlstellen des Füllers oder der Steinschlagschutzgrundierung üblicherweise durch Schleifen beseitigt. Hierbei können Schleifstaubreste in Form von Fingerabdrücken oder bei Naßschliff in Form von eingetrockneten Wassertropfen zurückbleiben. Nach der Überlackierung mit Wasserbasislack und Klarlack zeichnen sich diese "Fingerabdrücke" und/oder "Tropfen" als helle, deutlich sichtbare Stellen in der resultierenden farb- und/oder effektgebenden Mehrschichtlackierung ab. Diese optischen Fehlstellen werden vom Fachmann auch als "helle Flecken" bezeichnet.

Solche optischen Fehlstellen treten ebenfalls auf, wenn die Klarlackierung einer farb- und/oder effektgebenden Mehrschichtlackierung zu Zwecken besserer Haftung einer zu applizierenden Reparaturlackierung angeschliffen wird. Diese optischen Fehlstellen werden vom Fachmann auch als "Schleifflecke" bezeichnet.

Bei diesen hellen Flecken handelt es sich nicht um Schleifriefen, die schlecht abgedeckt sind, sondern sie können bereits durch Schweißtropfen oder den Schweiß an den Fingern hervorgerufen werden.

Eine weitere Art von optischen Fehlstellen, sogenannte Polierflecken, resultieren, wenn die fertige farb- und/oder effektgebende Mehrschichtlackierung an schadhaften Stellen poliert wird, dann aber wegen weiterer schadhafter Stellen einer vollständigen Reparaturlackierung unterzogen werden muß, wobei auch die polierten Stellen überlackiert werden. In der Reparaturlackierung sind diese Polierstellen wegen ihres anderen Farbtons sehr deutlich zu sehen.

Bisher konnten diese optischen Fehlstellen nur durch außerordentlich sorgfältiges und vorsichtiges Arbeiten und einen hohen zusätzlichen Reinigungsaufwand vermieden werden, da die bislang zur Verfügung stehenden Wasserbasislacke nicht die ausreichende Unempfindlichkeit gegen solche Fehlstellen in und auf den Füllern bzw. in und auf den farb- und/oder effektgebenden Mehrschichtlackierungen aufweisen und somit diese Fehlstellen optisch nicht oder nicht in ausreichendem Maße kompensieren können. Dies führt aber zu längeren Verarbeitungszeiten und damit zu höheren Kosten bei der Lackierung in der Linie oder der Reparaturlackierung in der Linie oder in der Werkstatt.

Es besteht daher ein hoher Bedarf an Basislacken, insbesondere Wasserbasislacken, die diese Nachteile nicht mehr länger aufweisen, sondern die Fehlstellen optisch kompensieren, wobei ihre sonstigen vorteilhaften Eigenschaften in vollem Umfang erhalten bleiben, wenn nicht gar weiter verbessert werden.

Wasserbasislacke, die sich hervorragend für die Herstellung von farb-und/oder effektgebende Lackierungen eignen, sind beispielsweise aus der deutschen Patentanmeldung DE-A-44 37 535 bekannt. Sie enthalten ein anorganisches Verdickungsmittel, beispielsweise ein Schichtsilikat, und organische Lösungsmittel, beispielsweise Butylglykol. Als Bindemittel enthalten sie in Wasser lösliche oder dispergierbare Polyurethane, in Gegenwart solcher Polyurethane hergestellte, in wasserlösliche oder dispergierbare Polyacrylatharze und in Wasser lösliche oder dispergierbare Polyester. Sie weisen eine sehr hohe Lagerstabilität auch bei höheren Temperaturen auf. Die Verwendung von assoziativen Verdickungsmitteln auf Polyurethanbasis und/oder Dipropylenglykolmonoalkylethern geht aus der DE-A-44 37 535 nicht hervor.

Assoziative Verdickungsmittel auf Polyurethanbasis und ihre anwendungstechnischen Eigenschaften und Vorteile sind bekannt. Beispielhaft sei hierzu auf Römpp Lexikon Lacke und Druckfarben, Georg Thieme Verlag, Stuttgart, New York, 1998, »Verdickungsmittel«, Seiten 599 bis 600, und das Lehrbuch »Lackadditive« von Johan Bieleman, Wiley-VCH, Weinheim, New York, 1998, Seiten 51 bis 59 und 65, verwiesen. Die Verwendung dieser assoziativen Verdickungsmittel auf Polyurethanbasis zur Unterdrückung optischer Fehlstellen in farb- und/oder effektgebenden Mehrschichtlackierungen sowie deren Reparaturlackierungen werden hierin nicht beschrieben.

Aufgabe der vorliegenden Erfindung ist es neue Basislacke, insbesondere die Wasserbasislacke, die neue Kombinationen von Bestandteilen enthalten und die die Herstellung und die Reparatur von farb- und/oder effektgebenden Mehrschichtlackierungen ohne die Bildung von hellen Flecken oder Polierflecken ermöglichen. Dabei sollen die neuen Basislacke, insbesondere die neuen Wasserbasislacke, die besonderen Vorteile der bislang bekannten Basislacke auch weiterhin aufweisen oder weitere neue vorteilhafte Eigenschaften zeigen.

Demgemäß wurde die neue Verwendung von assoziativen Verdickungsmitteln auf Polyurethanbasis und/oder von Dipropylenglykolmonoalkylethern zur Unterdrückung optischer Fehlstellen in farb- und/oder effektgebenden Mehrschichtlackierungen sowie deren Reparaturlackierungen gefunden.

Im folgenden wird diese neue Verwendung als "erfindungsgemäße Verwendung" bezeichnet.

Des weiteren wurde der neue Wasserbasislack gefunden, der

(A) mindestens ein in Wasser lösliches oder dispergierbares Polyurethan,

(B) mindestens ein Vernetzungsmittel,

(C) mindestens ein farb- und/oder effektgebendes Pigment,

(D) mindestens ein Neutralisationsmittel,

(E) mindestens ein anorganisches Verdickungsmittel und

(F) mindestens einen Dipropylenglykolmonoalkylether

enthält.

Darüber hinaus wurde der weitere neue Wasserbasislack gefunden, der

(A) mindestens ein in Wasser lösliches oder dispergierbares Polyurethan mit funktionellen Gruppen (U2), die durch Neutralisationsmittel in Anionen überführt werden können, und/oder anionische Gruppen, insbesondere Carbonsäure- und/oder Carboxylatgruppen,

(B) mindestens ein Vernetzungsmittel,

(C) mindestens ein farb- und/oder effektgebendes Pigment,

(D) mindestens ein Neutralisationsmittel,

(E) mindestens ein anorganisches Verdickungsmittel,

(G) mindestens ein assoziatives Verdickungsmittel auf Polyurethanbasis,

(H) gegebenenfalls mindestens ein in Wasser lösliches oder dispergierbares, in der Gegenwart eines in Wasser löslichen oder dispergierbaren Polyurethans hergestelltes Polyacrylatharz und

(I) mindestens ein in Wasser lösliches oder dispergierbares Polyesterharz

enthält.

Im folgenden werden diese neuen Wasserbasislacke zusammenfassend als "erfindungsgemäße Wasserbasislacke" bezeichnet.

Nicht zuletzt wurden die neuen farb- und/oder effektgebende Mehrschichtlackierungen gefunden, die mindestens eine Basislackierung, herstellbar aus einem der erfindungsgemäßen Wasserbasislacke, enthält.

Im Hinblick auf den Stand der Technik war es überraschend und für den Fachmann nicht vorhersehbar, daß die Aufgabe der vorliegenden Erfindung mit Hilfe der erfindungsgemäßen Verwendung gelöst werden konnte. Noch überraschender war, daß die Lösung der Aufgabe nachweislich nicht auf den rheologischen Eigenschaften der erfindungsgemäßen Wasserbasislacke beruht, denn diese gleichen in dieser Hinsicht den bekannten Wasserbasislacken. Darüber hinaus war es völlig unerwartbar, daß die nachhaltige Unterdrückung oder Vermeidung von Polierflecken durch die Kombination des erfindungsgemäß zu verwendenden assoziativen Verdickungsmittels auf Polyurethanbasis (G) und mindestens eines Dipropylenglykolmonoalkylethers (F) erzielt werden kann.

Erfindungsgemäß kann das assoziative Verdickungsmittel auf Polyurethanbasis (G) oder der Dipropylenglykolmonoalkylether (F) alleine angewandt werden, wobei die alleinige Verwendung des assoziativen Verdickungsmittels (G) besondere Vorteile bietet und daher erfindungsgemäß bevorzugt ist. Ganz besondere Vorteile resultieren indes aus der gemeinsamen Verwendung dieser beiden Bestandteile, weswegen sie erfindungsgemäß besonders bevorzugt ist.

Der erste erfindungswesentliche Bestandteil der erfindungsgemäßen Wasserbasislacke ist somit mindestens ein assoziatives Verdickungsmittel auf Polyurethanbasis (G). Diese Verdickungsmittel bestehen üblicherweise aus nichtionischen hydrophoben Polymeren, die entweder in flüssiger Form, beispielsweise als 50 prozentige Lösung in Wasser oder in organischen Lösemitteln, oder in Pulverform verfügbar sind. Sie basieren auf wasserlöslichen Polyurethanen mit einem vergleichsweise niedrigen Molekulargewicht von 10.000 bis 50.000.

Die wasserlöslichen Polyurethane (G) werden hergestellt durch die Reaktion von Diisocyanaten, insbesondere die nachstehend beschriebenen Diisocyanate, mit Diolen, insbesondere die nachstehend beschriebenen Diole, und hydrophoben Blockierungskomponenten, wodurch die folgende idealisierte Struktur der allgemeinen Formel I resultiert.

$$R^1\text{-NH- C (O)-(- OCH}_2\text{CH}_2\text{-)}_x\text{-[- O- C-(O)-NH- }R^2\text{-NH- C (O)-(- OCH}_2\text{CH}_2\text{-)}_x\text{-]}_n\text{-O- C (O)-NH- }R^1$$

(I)

In der allgemeinen Formel I stehen die Indizes x und n für ganze Zahlen einer Höhe, daß die vorstehend angegebenen Molekulargewichte resultieren.

Der Rest $R^1$ steht für eine hydrophobe aliphatische oder aromatische Gruppe. Beispiele geeigneter Gruppen dieser Art sind Oleyl, Stearyl, Dodecylphenyl oder Nonylphenyl.

Der Rest $R^2$ steht für ein hydrophiles Segment. Beispiele geeigneter hydrophiler Segmente sind Polyester, insbesondere Polyester der Maleinsäure und Ethylenglykol, und Polyether, insbesondere Polyethylenglykol oder dessen Derivate.

Somit enthalten die erfindungsgemäß zu verwendenden assoziativen Verdickungsmittel auf Polyurethanbasis die drei folgenden Arten von Segmenten oder Bausteingruppen:

- hydrophobe Endsegmente,
- mehrere hydrophile Segmente und
- Urethangruppen.

Diese Segmente oder Bausteingruppen können in der unterschiedlichsten Weise miteinander verknüpft sein, so daß die unterschiedlichsten Polymerstrukturen resultieren. Erfindungsgemäß sind jedoch assoziative Verdickungsmittel von Vorteil, die lineare und kammförmige Polymerstrukturen aufweisen. Wesentlich ist, daß jedes Polymermolekül mindestens zwei hydrophobe Endsegmente enthält.

Für die Herstellung der erfindungsgemäßen Wasserbasislacke werden die erfindungsgemäß zu verwendenden assoziativen Verdickungsmittel (G) als Pulver oder vorzugsweise als 20- bis 30-Gew.-% ige Lösungen in mindestens einem mit Wasser verdünnbaren Lösemittel angewandt.

Vorteilhafterweise sind sie in den erfindungsgemäßen Wasserbasislacken in einer Menge von 0,1 bis 4,0, bevorzugt 0,4 bis 3,5 und insbesondere 0,4 bis 3,0 Gew.-%, jeweils bezogen auf das Gesamtgewicht des jeweiligen Wasserbasislacks, enthalten.

Dipropylenglykolmonoalkylether sind an sich bekannte Verbindungen, die auf dem Lackgebiet als Lösemittel oder als Lösemittelzusätze angewandt werden.

Beispiele geeigneter Alkylreste sind hierbei Methyl, Propyl, Isopropyl, n-Butyl, n-Pentyl oder n-Hexyl, von denen der Methylrest besonders vorteilhaft ist und deshalb besonders bevorzugt verwendet wird.

Der besonders bevorzugt verwendete Dipropylenglykolmethylether (F) ist eine an sich bekannte Verbindung oder ein ein an sich bekanntes Gemisch, die beide im Handel erhältlich sind. Er leitet sich ab von Dipropylenglykol, 1,1'-Oxybis-(2-propanol), und/oder dessen Isomere.

Vorteilhafterweise sind die Dipropylenglykolmonoalkylether (F) in den erfindungsgemäßen Wasserbasislacken in einer Menge von 0,5 bis 11, bevorzugt 1,0 bis 9 und insbesondere 1,0 bis 7,0 Gew.-%, jeweils bezogen auf das Gesamtgewicht des jeweiligen Wasserbasislacks, enthalten.

Der weitere wesentliche Bestandteil der erfindungsgemäßen Wasserbasislacke ist mindestens ein in Wasser lösliches oder dispergierbares Polyurethan (A). Polyurethane (A) und Verfahren zu ihrer Herstellung sind an sich bekannt

und werden beispielsweise in der deutschen Patentschrift DE-A-44 37 535 beschrieben.

Vorteilhafterweise weist das erfindungsgemäß zu verwendende Polyurethan (A) je nach Art der Stabilisierung eine Säurezahl oder Aminzahl von 10 bis 250 mg KOH/g (ionische Stabilisierung oder nichtionische plus ionische Stabilisierung) oder von 0 bis 10 mg KOH/g (nichtionische Stabilisierung), eine OH-Zahl von 30 bis 350 mg KOH/g und ein zahlenmittleres Molekulargewicht von 1.500 bis 55.000 Dalton auf.

Bekanntermaßen werden für die Herstellung der Polyurethane (A) Diisocyanate sowie gegebenenfalls in untergeordneter Mengen Polyisocyanate zur Einführung von Verzweigungen verwendet. Im Rahmen der vorliegenden Erfindung sind unter untergeordneten Mengen Mengen zu verstehen, die kein Gelieren der Polyurethane (A) bei ihrer Herstellung bewirken. Letzteres kann auch noch durch die Mitverwendung geringer Mengen an Monoisocyanaten verhindert werden.

Beispiele für geeignete Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE-A-44 14 032, GB-A-1220717, DE-A-16 18 795 oder DE-A-17 93 785 beschrieben wird; Toluylendiisocyanat, Xylylendiisocyanat, Bisphenylendiisocyanat, Naphthylendiisocyanat oder Diphenylmethandiisocyanat.

Beispiele geeigneter Polyisocyanate sind die Isocyanurate der vorstehend beschriebenen Diisocyanate.

Beispiele gut geeigneter Monoisocyanate sind Phenylisocyanat, Cyclohexylisocyanat oder Stearylisocyanat.

Für die Herstellung der erfindungsgemäß zu verwendenden Polyurethane (A) werden des weiteren

- gesättigte und ungesättigte höhermolekulare und niedermolekulare Polyole, insbesondere Diole und in untergeordneten Mengen Triole zur Einführung von Verzweigungen,
- Polyamine,
- Aminolakohole und
- Verbindungen, durch welche stabilisierende (potentiell) ionische und/oder nichtionische funktionelle Gruppen eingeführt werden,

verwendet

Beispiele geeigneter Polyole sind gesättigte oder olefinisch ungesättigte Polyesterpolyole, welche durch Umsetzung von

- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,

hergestellt werden.

Beispiele für geeigente Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure, Dodecandicarbonsäure oder Dimerfettsäuren oder Maleinsäure, Fumarsäure oder Itaconsäure von denen

Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen.

Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole einzuführen. Im Rahmen der vorliegenden Erfindung sind unter untergeordneten Mengen Mengen zu verstehen, die kein Gelieren der Polyesterpolyole bei ihrer Herstellung bewirken.

Geeignete Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol oder die stellungsisomeren Diethyloctandiole. Diese Diole können auch als solche für die Herstellung der erfindungsgemäß zu verwendenden Polyurethane (A) eingesetzt werden.

Weitere Beispiele geeigneter Diole sind Diole der Formel I oder II:

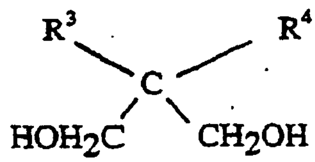

(I),

in der $R^3$ und $R^4$ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß $R^3$ und/oder $R^4$ nicht Methyl sein darf;

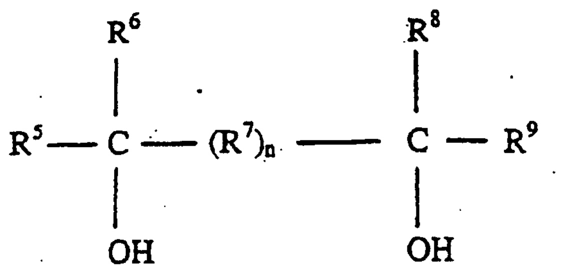

(II),

in der $R^5$, $R^6$, $R^8$ und $R^9$ jeweils gleiche oder verschiedene Reste darstellen und für einen Alkylrest mit 1 bis 6 C-Atomen, einen Cycloalkylrest oder einen Arylrest stehen und $R^7$ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Diole I der allgemeinen Formel I sind alle Propandiole der Formel geeignet, bei denen entweder $R^3$ oder $R^4$ oder $R^3$ und $R^4$ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropahdiol-1,3, 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpropandiol-1,3 und andere.

Als Diole II der allgemeinen Formel II können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Von diesen Diolen sind Hexandiol und Neopentylglykol besonders vorteilhaft und werden deshalb besonders bevorzugt verwendet.

Die vorstehend genannten Diole können auch als solche für die Herstellung der erfindungsgemäß zu verwendenden Polyurethane (A) eingesetzt werden.

Beispiele geeigneter Triole sind Trimethylolethan, Trimethylolpropan oder Glycerin, insbesondere Trimethylolpropan.

Die vorstehend genannten Triole können auch als solche für die Herstellung der erfindungsgemäß zu verwendenden Polyurethane (A) eingesetzt werden (vgl. die Patentschrift EP-A-0 339 433).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole, Allylalkohol oder Phenol.

Die Herstellung der Polyesterpolyole kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel $-(-CO-(CHR^{10})_m- CH_2-O-)-$ aus. Hierbei ist der Index m bevorzugt 4 bis 6 und der Substitutent $R^{10}$ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ###-Caprolacton, bei dem m den Wert 4 hat und alle $R^{10}$-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ###-Caprolactam mit niedermolekularen Diolen hergestellt werden.

Weitere Beispiele geeigneter Polyole sind Polyetherpolyole, insbesondere mit einem zahlenmittleren Molekulargewicht von 400 bis 5000, insbesondere von 400 bis 3000. Gut geeignete Polyetherdiole sind z.B. Polyetherdiole der allgemeinen Formel $H-(-O-(CHR^{11})_o-)_pOH$, wobei der Substituent $R^{11}$ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly (oxypropylen)glykole und Poly(oxybutylen)glykole genannt.

Die Polyetherdiole sollen einerseits keine übermäßigen Mengen an Ethergruppen einbringen, weil sonst die gebildeten erfindungsgemäß zu verwendenden Polyurethane (A) in Wasser anquellen. Andererseits können sie in Mengen verwendet werden, welche die nichtionische Stabilisierung der Polyurethane (A) gewährleistet. Sie dienen dann als die nachstehend beschriebenen funktionellen nichtionischen Gruppen (a3).

Das erfindungsgemäß zu verwendende Polyurethan (A) enthält entweder

(a1) funktionelle Gruppen, die durch Neutralisationsmittel und/oder Quaternisierungsmittel in Kationen überführt werden können, und/oder kationische Gruppen, insbesondere Ammoniumgruppen,

oder

(a2) funktionelle Gruppen, die durch Neutralisationsmittel in Anionen überführt werden können, und/oder anionische Gruppen, insbesondere Carbonsäure- und/oder Carboxylatgruppen,

und/oder

(a3) nichtionische hydrophile Gruppen, insbesondere Poly(alkylenether)-Gruppen.

Beispiele geeigneter erfindungsgemäß zu verwendender funktioneller Gruppen (a1), die durch Neutralisationsmittel (D) und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (a1) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder quaternäre Ammoniumgruppen, tertiäre Sulfoniumgruppen, insbesondere aber tertiäre Sulfoniumgruppen.

Beispiele geeigneter erfindungsgemäß zu verwendender funktioneller Gruppen (a2), die durch Neutralisationsmittel (D) in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (a2) sind Carboxylat-, Sulfonat- oder Phosphonatgruppen, insbesondere Carboxylatgruppen.

Enthält der erfindungsgemässe Wasserbasislack die Bestandteile (A), (B), (C), (D), (E), (G), (I) und ggf. (H), sind die Gruppen (U2) zwingend in (A) enthalten.

Beispiele geeigneter Neutralisationsmittel (D) für in Kationen umwandelbare funktionelle Gruppen (a1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel (D) für in Anionen umwandelbare funktionelle Gruppen (a2) sind tertäre Amine, wie z.B. Trimethylamin, Triethylamin, Tributylamin, Dimethylanilin, Diethylanilin, Triphenylamin, Dimethylethanolamin, Diethylethanolamin, Methyldiethanolamin oder Triethanolamin. Die Neutralisation kann in organischer Phase oder in wäßriger Phase erfolgen. Bevorzugt wird als Neutralisationsmittel Dimethylethanolamin eingesetzt.

Die insgesamt in dem erfindungsgemäßen Wasserbasislack eingesetzte Menge an Neutralisationsmittel (D) wird so gewählt, daß 1 bis 100 Äquivalente, bevorzugt 50 bis 90 Äquivalente der funktionellen Gruppen (a1) oder (a2) des erfindungsgemäß zu verwendenden Polyurethans (A) neutralisiert werden.

Von diesen funktionellen (potentiell) ionischen Gruppen (a1) und (a2) und funktionellen nichtionischen Gruppen (a3) sind die (potentiell) anionischen Gruppen (a2) vorteilhaft und werden deshalb besonders bevorzugt verwendet.

Die Einführung von (potentiell) anionischen Gruppen (a2) in die Polyurethanmoleküle erfolgt über den Einbau von Verbindungen, die mindestens eine gegenüber Isocyanatgruppen reaktive und eine zur Anionenbildung befähigte Gruppe im Molekül enthalten; die einzusetzende Menge kann aus der angestrebten Säurezahl berechnet werden.

Beispiele geeigneter Verbindungen dieser Art sind solche, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Demnach können beispielsweise Alkansäuren mit zwei Substituenten am alpha-ständigen Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybernsteinsäure und Dihydroxybenzoesäure. Eine besonders bevorzugte Gruppe von Alkansäuren sind die alpha,alpha-Dimethylolalkansäuren der allgemeinen Formel $R^{12}$-C $(CH_2OH)_2COOH$, wobei $R^{12}$ für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise alpha,gamma-Diaminovaleriansäure, 3,4-Diaminobenzoesäure, 2,4-Diaminotoluolsulfonsäure und 2,4-Diaminodiphenylethersulfonsäure.

Nichtionische stabilisierende Poly(oxyalkylen)gruppen (a3) können als laterale oder endständige Gruppen in die Polyurethanmoleküle eingeführt werden. Hierfür können beispielsweise Alkoxypoly(oxyalkylen)alkohole mit der allgemeinen Formel $R^{13}O\text{-}(\text{-}CH_2\text{-}CHR^{14}\text{-}O\text{-})_r$ H in der $R^{13}$ für einen Alkylrest mit 1 bis 6 Kohlenstoffatomen, $R^{14}$ für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP-A-0 354 261 oder EP-A-0 424 705).

Der Einsatz von Polyolen, Polyaminen und Aminoalkoholen führt zur Molekulargewichtserhöhung der Polyurethane (A).

Geeignete Polyole für die Kettenverlängerung sind Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A oder deren Mischungen (vgl. Patentschriften EP-A- 0 339 433, EP-A- 0 436 941, EP-A- 0 517 707).

Beispiele geeigneter Polyamine weisen mindestens zwei primäre und/oder sekundäre Aminogruppen auf. Polyamine sind im wesentlichen Alkylenpolyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenothanolamin. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin ist Ethylhexylamin zu nennen (vgl. die Patentschrift EP-A- 0 089 497).

Beispiele geeigneter Aminoalkohole sind Ethanolamin oder Diethanolamin.

In den erfindungsgemäßen Wasserbasislacken sind die Polyurethane (A) vorteilhafterweise in einer Menge von 1,0 bis 50, bevorzugt 2,0 bis 40, besonders bevorzugt 3,0 bis 30, ganz besonders bevorzugt 4,0 bis 25 und insbesondere 5,0 bis 20 Gew.-%, jeweils bezogen auf das Gesamtgewicht des jeweiligen erfindungsgemäßen Wasserbasislacks, enthalten.

Der weitere wesentliche Bestandteil des erfindungsgemäßen Beschichtungsstoffs ist mindestens ein Vernetzungsmittel (B).

Beispiele geeigneter Vernetzungsmittel (B) sind Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP-A-0 596 460 beschrieben werden.

Derartige Vernetzungsmittel sind dem Fachmann gut bekannt und werden von zahlreichen Firmen als Verkaufsprodukte angeboten.

Beispiele fiir geeignete Polyepoxide sind insbesondere alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol® EX-512 (Polyglycerolpolyglycidylether) und Denacol® EX-521 (Polyglycerolpolyglycidylether).

Die geeigneten Tris(alkoxycarbonylamino)triazine wiesen die folgende Formel auf:

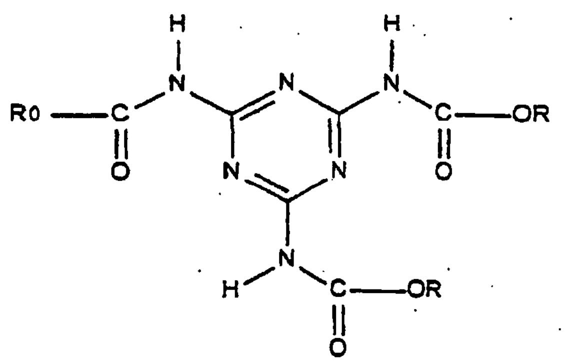

Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/oder Tris (2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Ein Beispiel eines geeigneten Polyanhydrids ist Polysuccinsäureanhydrid.

Beispiele geeigneter beta-Hydroxyalkylamide sind N,N,N',N'-Tetrakis(2-hydroxyethyl)adipamid oder N,N,N', N'-Tetrakis(2-hydroxypropyl)-adipamid.

Weitere Beispiele geeigneter Vernetzungsmittel sind die blockierten Polyisocyanate.

Beispiele geeigneter Blockierungsmittel sind die aus der US-Patentschrift US-A-4,444,954 bekannten Blockierungsmittel:

i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;

ii) Lactame, wie ε-Caprolactam, δ-Valerolactam, γ-Butyrolactam oder β-Propiolactam;

iii) aktive methylenische Verbindungen, wie Diethylmalonat, Dimethylmalonat, Acetessigsäureethyl- oder -methylester oder Acetylaceton;

iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;

v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;

vi) Säureamide wie Acetoanilid, Acetoanisidinamid, Acrylamid, Methacrylamid, Essigsäureamid, Stearinsäureamid oder Benzamid;

vii) Imide wie Succinimid, Phthalimid oder Maleimid;

viii) Amine wie Diphenylamin, Phenylnaphthylamin, Xylidin, N-Phenylxylidin, Carbazol, Anilin, Naphthylamin, Butylamin, Dibutylamin oder Butylphenylamin;

ix) Imidazole wie Imidazol oder 2-Ethylimidazol;

x) Harnstoffe wie Harnstoff, Thioharnstoff, Ethylenharnstoff, Ethylenthioharnstoff oder 1,3-Diphenylharnstoff;

xi) Carbamate wie N-Phenylcarbamidsäurephenylester oder 2-Oxazolidon;

xii) Imine wie Ethylenimin;

xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;

xiv) Salze der schwefeligen Säure wie Natriumbisulfit oder Kaliumbisulfit;

xv) Hydroxamsäureester wie Benzylmethacrylohydroxamat (BMH) oder Allylmethacrylohydroxamat; oder

xvi) substituierte Pyrazole, Ketoxime, Imidazole oder Triazole; sowie

xvii) Gemische dieser Blockierungsmittel, insbesondere Dimethylpyrazol und Triazole, Malonester und Acetessigsäureester oder Dimethylpyrazol und Succinimid.

Beispiele geeigneter zu blockierender organischer Polyisocyanate sind insbesondere die sogenannten Lackpolyisocyanate mit aliphatisch, cycloaliphatisch, araliphatisch und/oder aromatisch gebundenen Isocyanatgruppen. Bevorzugt werden Polyisocyanate mit 2 bis 5 Isocyanatgruppen pro Molekül und mit Viskositäten von 100 bis 10.000, vorzugsweise 100 bis 5000. Außerdem können die Polyisocyanate in üblicher und bekannter Weise hydrophil oder hydrophob modifiziert sein.

Weitere Beispiele fiir geeignete zu blockierende Polyisocyanate sind in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter zu blockierender Polyisocyanate sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat, Dicyclohexylmethan-4,4'-diisocyanat, Düsocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden insbesondere 2-Heptyl-3,4-bis(9-isocyanatononyl)-1-pentyl-cyclohexan; oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, 1,8-Diisocyanato-4-isocyanatomethyl-octan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Ganz besonders bevorzugt werden Gemische aus Uretdion-und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt.

Insbesondere sind Aminoplastharze, beispielsweise Melaminharze, Guanaminharze oder Harnstoffharze, als Vernetzungsmittel (B) verwendbar. Hierbei kann jedes fiir transparente Decklacke oder Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Vorzugsweise sind die Aminoplastharze in den erfindungsgemäßen Wasserbasislacken als die überwiegenden oder alleinigen Vernetzungsmittel (B) enthalten. Die sonstigen vorstehend genannten Vernetzungsmittel (B) können als zusätzliche Vernetzungsmittel (B) für die weitere vorteilhafte Variierung des Eigenschaftsprofils der erfindungsgemäßen Wasserbasislacke und der hieraus hergestellten erfindungsgemäßen Basislackierungen und erfindungsgemäßen Farb- und/oder effektgebenden Mehrschichtlackierungen mit verwendet werden, wobei ihr Anteil an den Vernetzungsmitteln (B) <50 Gew.-% beträgt.

Vorzugsweise werden die Vernetzungsmittel (B) in den erfindungsgemäßen Wasserbasislacken in einer Menge von 0,1 bis 30, bevorzugt 0,3 bis 20, besonders bevorzugt 0,5 bis 10 und insbesondere 1,0 bis 8,0 Gew.-%, jeweils bezogen auf das Gesamtgewicht des jeweiligen erfindungsgemäßen Wasserbasislacks, angewandt.

Noch ein weiterer wesentlicher Bestandteil des erfindungsgemäßen Wasserbasislacks ist mindestens ein farb- und/oder effektgebendes Pigment (C). Die Pigmente (C) können aus anorganischen oder organischen Verbindungen bestehen. Der erfindungsgemäße Wasserbasislack gewährleistet daher aufgrund dieser Vielzahl geeigneter Pigmente eine universelle Einsatzbreite und ermöglicht die Realisierung einer Vielzahl von Farbtönen und optischer Effekte.

Als Effektpigmente (C) können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente (C) sind Titandioxid, Eisenoxide, Sicotransgelb und Ruß. Beispiele für geeignete organische farbgebende Pigmente (C) sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente « bis »Pigmentsvolumenkonzentration«, Seite 563 »Thioindigo-Pigmente« und Seite 567 »Titandioxid-Pigmente « verwiesen.

Der Anteil der Pigmente (C) an dem erfindungsgemäßen Wasserbasislack kann außerordentlich breit variieren und richtet sich vor allem nach der Deckkraft der Pigmente (C), dem gewünschten Farbton und dem gewünschten optischen Effekt. Vorzugsweise sind die Pigmente (C) in dem erfindungsgemäßen Wasserbasislack in einer Menge von 0,5 bis 50, bevorzugt 0,5 bis 45, besonders bevorzugt 0,5 bis 40, ganz besonders bevorzugt 0,5 bis 35 und insbesondere 0,5 bis 30 Gew.-%, jeweils bezogenen auf das Gesamtgewicht des erfindungsgemäßen Wasserbasislacks, enthalten. Dabei kann auch das Pigment/Bindemittel Verhältnis, d. h. das Verhältnis der Pigmente (C) zu den vorstehend beschriebenen Polyurethanen (A) oder zu den Polyurethanen (A) und den nachstehend beschriebenen Polyacrylatharzen (H) und Polyestern (I), außerordentlich breit variieren. Vorzugsweise liegt dieses Verhältnis bei 4,0 : 1,0 bis 1,0 : 50, bevorzugt 3,5 : 1,0 bis 1,0 : 50, besonders bevorzugt 3,0 : 1,0 bis 1,0 : 40, ganz besonders bevorzugt 2,5 : 1,0 bis 1,0 : 30 und insbesondere 2,3 : 1,0 bis 1,0 : 25.

Diese Pigmente (C) können auch über Pigmentpasten in die erfindungsgemäßen Wasserbasislacke eingearbeitet werden, wobei als Reibharze u.a. die vorstehend beschriebenen Polyurethane (A) und/oder die nachstehend beschriebenen Polyacrylatharze (H) und/oder Polyesterharze (I) in Betracht kommen.

Noch ein weiterer wesentlicher Bestandteil des erfindungsgemäßen Wasserbasislacks ist mindestens ein anorganisches Verdickungsmittel (E).

Beispiele geeigneter anorganischer Verdickungsmittel (E) sind anorganische Schichtsilikate, vorzugsweise Smektite, insbesondere Montmorillonite und Hectorite, wie Aluminium-Magnesium-Silikate, Natrium-Magnesium- und Natrium-Magnesium-Fluor-Lithium-Schichtsilikate des Montmorillonit-Typs oder anorganische Schichtsilikate wie Aluminium-Magnesium-Silikate, Natrium-Magnesium- und Natrium-Magnesium-Fluor-Lithium-Schichtsilikate des Montmorillonit-Typs. Ergänzend wird auf das Buch von Johan Bielemann »Lackadditive«, Wiley-VCH, Weinheim, New York, 1998, Seiten17 bis 30, verwiesen.

In den erfindungsgemäßen Wasserbasislacken sind die Verdickungsmittel (E) vorzugsweise in einer Menge von 0,01 bis 5,0, bevorzugt 0,05 bis 3,0, besonders bevorzugt 0,1 bis 2,5, ganz besonders bevorzugt 0,2 bis 2,0 und insbesondere 0,3 bis 1,5 Gew.-%, jeweils bezogen auf das Gesamtgewicht des erfindungsgemäßen Wasserbasislacks, enthalten.

In einer bevorzugten Ausführungsform des erfmdungsgemäßen Wasserbasislacks enthält dieser neben den Polyurethanen (A) mindestens ein in Wasser lösliches oder dispergierbares, in der Gegenwart eines in Wasser löslichen oder dispergierbaren Polyurethans hergestelltes Polyacrylatharz (H).

Beispiele geeigneter Polyurethane, in deren Gegenwart das Polyacrylatharz (H) hergestellt wird, enthalten laterale, terminale und/oder in der Polymerhauptkette befindliche olefinisch ungesättigte Gruppen oder keine olefinisch ungesättigten Gruppen. Beispiele gut geeigneter Polyurethane dieser Art sind aus den Patentschriften EP-A-0 521 928, EP-A-0 522 420, EP-A-0 522 419 oder EP-A-0 730 613 (olefinisch ungesättigte) oder DE-A-44 37 535 (gesättigte) bekannt. Beispiele besonders gut geeigneter Polyurethane sind die vorstehend beschriebenen Polyurethane (A), insbesondere die Carbonsäuregruppen und/oder Carboxylatgruppen enthaltenden Polyurethane (A).

Dementsprechend sind auch die Polyacrylatharze (H), die Carbonsäuregruppen und/oder Carboxylatgruppen als löslichkeitsvermittelnde oder dispergierende Gruppen enthalten erfindungsgemäß von Vorteil und werden deshalb bevorzugt verwendet. Hinsichtlich der Neutralisation der Polyacrylatharze (H) gilt das vorstehend bei den Polyurethanen (A) Gesagte sinngemäß.

Erfindungsgemäß ist es von Vorteil, die Polyacrylatharze (H) in der Gegenwart gesättigter Polyurethane (A) herzustellen, weswegen diese Variante besonders bevorzugt wird.

Ganz besonders gut geeignete Polyacrylatharze (H) werden erhalten durch die Copolymerisation der nachstehend beschriebenen olefinisch ungesättigter Monomere (h), von denen mindestens eines mindestens eine Carbonsäuregruppe enthält und vorzugsweise mindestens eines mindestens eine Hydroxylgruppe enthält und im wesentlichen säuregruppenfrei ist.

Beispiele geeigneter Monomere (h) sind:

**Monomere (h1):**

Hydroxyalkylester der Acrylsäure, Methacrylsäure einer anderen alpha,betaethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure oder Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat oder -crotonat; 1,4-Bis(hydroxymethyl)cyclohexan-, Octahydro-4,7-methano-1H-inden-dimethanol- oder Methylpropandiolmonoacrylat, -monomethacrylat, -monoethacrylat oder -monocrotonat; oder Umsetzungsprodukte aus cyclischen Estern, wie z.B. epsilon-Caprolacton und diesen Hydroxyalkylestern; oder olefinisch ungesättigte Alkohole wie Allylalkohol oder Polyole wie Trimethylolpropanmono- oder diallylether oder Pentaerythritmono-, -di- oder -triallylether. Diese höherfunktionellen Monomeren (h1) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen. So kann der Anteil an Trimethylolpropanmonoallylether 2 bis 10 Gew.-%, bezogen auf das Gesamtgewicht der zur Herstellung des Polyacrylatharzes eingesetzten Monomeren (h1) bis (h6) betragen. Daneben ist es aber auch möglich, 2 bis 10 Gew.-%, bezogen auf das Gesamtgewicht der zur Herstellung des Polyacrylatharzes eingesetzten Monomeren (h), Trimethylolpropanmonoallylether zum fertigen Polyacrylatharz zuzusetzen. Die olefinisch ungesättigten Polyole (h1) können zwar als die alleinigen Monomeren (h1) verwendet werden, erfindungsgemäß ist es indes von Vorteil sie in Kombination mit weiteren Monomeren (h1) einzusetzen.

**Monomere (h2):**

(Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat;

cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-lHinden-dimethanol- oder Cyclohexan-1,2-, -1,3- oder -1,4-diol-di(meth)acrylat; Trimethylolpropan-di- oder -tri (meth)acrylat; oder Pentaerythrit-di-, -tri- oder -tetra(meth)acrylat; enthalten. Im Rahmen der vorliegenden Erfindung sind hierbei unter untergeordneten Mengen an höherfunktionellen Monomeren (h2) solche Mengen zu verstehen, welche nicht zur Vernetzung oder Gelierung der Polyacrylatharze führen.

**Monomere (h3):**

Mindestens eine Säuregruppe, vorzugsweise eine Carboxylgruppe, pro Molekül tragende ethylenisch ungesättigte Monomer oder ein Gemisch aus solchen Monomeren. Als Komponente (h3) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfonoder Phosphonsäuren, bzw. deren Teilester, als Komponente (h3) verwendet werden. Als Monomere (h3) kommen desweiteren Maleinsäuremono (meth)acryloyloxyethylester, Bernsteinsäuremono(meth)acryloyloxyethylester und Phthalsäuremono(meth)acryloyloxyethylester in Betracht.

**Monomere (h4):**

Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

**Monomere (h5):**

Umsetzungsprodukt aus Acrylsäure und/oder Methacrylsäure mit dem Glycidylester einer in alpha-Stellung verzweigten Monocarbonsäure mit 5 bis 18 C-Atomen je Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (h5) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich.

Ergänzend wird auf Römpp Lexikon Lacke und Druckfarben, Georg Thieme Verlag, Stuttgart, New York, 1998, Seiten 605 und 606, verwiesen.

**Monomere (h6):**

Im wesentlichen säuregruppenfreie ethylenisch ungesättigte Monomere wie

- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;

- (Meth)Acrylsäureamide wie (Meth)Acrylsäureamid, N-Methyl -, N,N-Dimethyl-, N-Ethyl-, N,N-Diethyl-, N-Propyl-, N, N-Dipropyl, N-Butyl-, N,N-Dibutyl-, N-Cyclohexyl- und/oder N,N-Cyclohexyl-methyl-(meth)acrylsäureamid;

- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;

- vinylaromatische Kohlenwasserstoffe, wie Styrol, alpha-Alkylstyrole, insbesondere alpha-Methylstyrol, Arylstyrole, insbesondere Diphenylethylen, und/oder Vinyltoluol;

- Nitrile wie Acrylnitril und/oder Methacrylnitril;

- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat, Vinylester der Versatic®-Säuren, die unter dem Markennamen VeoVa® von der Firma Deutsche Shell Chemie vertrieben werden (ergänzend wird auf Römpp Lexikon Lacke und Druckfarben, Georg Thieme Verlag, Stuttgart, New York, 1998, Seite 598 sowie Seiten 605 und 606, verwiesen) und/oder der Vinylester der 2-Methyl-2-ethylheptansäure; und/oder

- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Erfindungsgemäß ist es von ganz besonderem Vorteil, die Monomeren (h) derart auszuwählen, daß hydroxylgruppenhaltige Polyacrylatharze resultieren, die vorzugsweise eine OH-Zahl von 0 bis 200, bevorzugt 60 bis 140, vorzugsweise Säurezahlen von 20 bis 100, bevorzugt 25 bis 50, vorzugsweise Glasübergangstemperaturen Tg von -25 bis +80 °C, bevorzugt -20 bis +40 °C, und vorzugsweise zahlenmittlere Molekulargewichte von 1.500 bis 30.000, bevorzugt 1.500 bis 20.000 (bestimmt durch Gelpermeationschromatographie mit Polystyrol als internem Standard), aufweisen.

Die Glasübergangstemperatur Tg der Polyacrylatharze (H) wird durch Art und Menge der eingesetzten Monomere (h1) und gegebenenfalls (h2), (h3), (h4), (h5) und/oder (h6) bestimmt. Die Auswahl der Monomeren kann vom Fachmann unter Zuhilfenahme der folgenden Formel von Fox, mit der die Glasübergangstemperaturen Tg von (Co) Polymerisaten, insbesondere Polyacrylatharzen, näherungsweise berechnet werden können, vorgenommen werden:

$$1/Tg = \sum_{n=1}^{n=x} W_n/Tg_n; \qquad \sum_n W_n = 1$$

Tg = Glasübergangstemperatur des Polyacrylatharzes
$W_n$ = Gewichtsanteil des n-ten Monomers
$Tg_n$ = Glasübergangstemperatur des Homopolymers aus dem n-ten Monomer
x = Anzahl der verschiedenen Monomeren

Methodisch gesehen weist die Herstellung der erfindungsgemäß zu verwendenden Hydroxylgruppen enthaltenden Polyacrylatharze (H) keine Besonderheiten auf, sondern erfolgt nach den üblichen und bekannten Methoden der radikalischen Polymerisation in Gegenwart mindestens eines Polymerisationsinitiators.

Beispiele geeigneter Polymerisationsinitiatoren sind freie Radikale bildende Initiatoren, wie z.B. tert.-Butylperoxyethylhexanoat, Benzoylperoxid, Di-tert.-Amylperoxid, Azobisisobutyronitril und tert.-Butylperbenzoat genannt. Die Initiatoren werden bevorzugt in einer Menge von 1 bis 25 Gew.-%, besonders bevorzugt von 2 bis 10 Gew.-%, bezogen auf das Gesamtgewicht der Monomeren, eingesetzt.

Die Polymerisation wird zweckmäßigerweise bei einer Temperatur von 80 bis 200 °C, vorzugsweise 110 bis 180 °C, durchgeführt.

Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde, nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Ein besonders bevorzugtes Verfahren zur Herstellung der Polyacrylatharze (H) wird in der DE-A-44 37 535 beschrieben.

Hierbei wird in einem ersten Verfahrensschritt ein von copolymerisierbaren Doppelbindungen freies Polyurethan, insbesondere ein Polyurethan (A), in organischer Lösung vorgelegt, wonach ein Gemisch aus mindestens einem Monomeren (h1) und mindestens einem Monomeren (h2) sowie gegebenenfalls jeweils mindestens einem Monomeren (h4), (h5) und/oder (h6) hinzugegeben und copolymerisiert wird. Nach dem diese Monomeren (h) nahezu vollständig umgesetzt sind, wird in einem zweiten Verfahrensschritt ein Gemisch von mindestens einem Monomeren (h3) sowie jeweils mindestens einem Monomeren (h1) (h2), (h4), (h5) und/oder (h6) zugegeben, wonach die resultierende Reaktionsmischung vollständig auspolymerisiert wird.

Auch apparativ weist die Herstellung der erfindungsgemäß zu verwendenden Polyacrylatharze (H) keine methodischen Besonderheiten auf, sondern erfolgt mit Hilfe der auf dem Kunststoffgebiet üblichen und bekannten Methoden der kontinuierlichen oder diskontinuierlichen Copolymerisation unter Normaldruck oder Überdruck in Rührkesseln, Autoklaven, Rohrreaktoren oder Taylorreaktoren.

Beispiele geeigneter Copolymerisationsverfahren und -vorrichtungen werden in den Patentschriften DE-A-197 09 465, DE-C-197 09 476, DE-A-28 48 906, DE-A-195 24 182, EP-A-0 554 783, WO 95/27742 oder WO 82/02387 beschrieben.

Nach ihrer Herstellung werden die Polyacrylatharze (H) mit mindestens einem der vorstehend beschriebenen geeigneten Neutralisationsmittel (D) neutralisiert und in Wasser dispergiert. Die insgesamt in dem erfindungsgemäßen Wasserbasislack eingesetzte Menge an Neutralisationsmittel (D) wird dabei so gewählt, daß 1 bis 100 Äquivalente, bevorzugt 50 bis 90 Äquivalente der Carbonsäuregruppen der erfindungsgemäß zu verwendenden Polyurethane (A) und der Polyacrylatharze (H) neutralisiert werden.

Der Anteil der Polyacrylatharze (H) an den erfindungsgemäßen Wasserbasislacken kann breit variieren. Vorzugsweise liegt er bei 0,1 bis 10, bevorzugt 0,5 bis 8,0, besonders bevorzugt 0,6 bis 6,0, ganz besonders bevorzugt 0,8 bis 6,0 und insbesondere 1,0 bis 6,0 Gew.-%, jeweils bezogen auf das Gesamtgewicht des jeweiligen erfindungsgemäßen Wasserbasislacks.

In noch einer weiteren bevorzugten Ausführungsform des erfindungsgemäßen Wasserbasislacks enthält dieser mindestens ein in Wasser lösliches oder dispergierbares Polyesterharz (I).

Beispiele geeigneter Ausgangsprodukte fiir die Herstellung der Polyesterharze (I) sind die vorstehend bei der Herstellung der Polyesterpolyole beschriebenen Verbindungen.

Beispiele geeigneter Polyesterharze (I) und ihre Herstellung aus den besagten Ausgangsprodukten werden in den Patentschriften DE-A-40 09 858 oder DE-A-44 37 535 im Detail beschrieben.

Auch der Anteil der Polyesterharze (I) an den erfindungsgemäßen Wasserbasislacken kann breit variieren. Vorzugsweise liegt er bei 0,5 bis 12, bevorzugt 0,7 bis 10, besonders bevorzugt 0,8 bis 9,0, ganz besonders bevorzugt 1,0 bis 8,0 und insbesondere 1,5 bis 7,0 Gew.-%, jeweils bezogen auf das Gesamtgewicht des jeweiligen erfindungsgemäßen Wasserbasislacks.

Zusätzlich zu den vorstehend beschriebenen Bestandteilen kann der erfindungsgemäße Wasserbasislack übliche und bekannte Additive (J) in wirksamen Mengen enthalten.

Beispiele geeigneter Additive (J) sind

- organische und anorganische Füllstoffe wie Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl; ergänzend wird auf Römpp Lexikon Lacke und Druckfarben, Georg Thieme Verlag, 1998, Seiten 250 ff., »Füllstoffe«, verwiesen;

- übliche und bekannte oligomere und polymere Bindemittel wie thermisch härtbare hydroxylgruppenhaltige lineare und/oder verzweigte und/oder blockartig, kammartig und/oder statistisch aufgebaute Poly(meth)acrylate oder Acrylatcopolymerisate, Polyester, Alkyde, acrylierte Polyester, Polylactone, Polycarbonate, Polyether, Epoxidharz-Amin-Addukte, (Meth)Acrylatdiole, partiell verseifte Polyvinylester oder Polyhamstoffe;

- übliche und bekannte thermisch härtbare Reaktiverdünner wie stellungsisomere Diethyloctandiole oder Hydroxylgruppen enthaltende hyperverzweigte Verbindungen oder Dendrimere;

- niedrig siedende und/oder hochsiedende organische Lösemittel ("lange Lösemittel");

- UV-Absorber;

- Lichtschutzmittel wie HALS-Verbindungen, Benztriazole oder Oxalanilide;

- Radikalfänger,

- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;

- Katalysatoren für die Vernetzung wie Dibutylzinndilaurat, Lithiumdecanoat oder Zinkoctoat oder mit Aminen blokkierte organische Sulfonsäuren;

- Entlüftungsmittel, wie Diazadicycloundecan;

- Slipadditive;

- Polymerisationsinhibitoren;

- Entschäumer;

- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;

- Netzmittel wie Siloxane, fluorhaltige Verbindungen, Carbonsäurehalbester, Phosphorsäureester, Polyacrylsäuren und deren Copolymere oder Polyurethane;

- Haftvermittler wie Tricyclodecandimethanol;

- Verlaufmittel;

- filmbildende Hilfsmittel wie Cellulose-Derivate;

- transparente Füllstoffe auf der Basis von Siliziumdioxid, Aluminiumoxid, Titandioxid oder Zirkoniumoxid; ergänzend wird noch auf das Römpp Lexikon Lacke und Druckfarben, Georg Thieme Verlag, Stuttgart, 1998, Seiten 250 bis 252, verwiesen;

- weitere rheologiesteuernde Additive, wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydridoder Ethylen-Maleinsäureanhydrid-Copolymere und ihre Derivate oder hydrophob modifizierte Polyacrylate; und/oder

- Flammschutzmittel.

Weitere Beispiele geeigneter Lackadditive werden in dem Lehrbuch »Lackadditive« von Johan Bieleman, Wiley-VCH, Weinheim, New York, 1998, beschrieben.

Die erfindungsgemäßen Wasserbasislacke weisen bei Spritzviskosität vorzugsweise einen Festkörpergehalt von 5,0 bis 60, bevorzugt 5,0 bis 50, besonders bevorzugt 10 bis 45 ganz besonders bevorzugt 13 bis 40 und insbesondere 13 bis 35 Gew.-%, jeweils bezogen auf das Gesamtgewicht des jeweiligen erfindungsgemäßen Wasserbasislacks, auf.

Die Herstellung des erfindungsgemäßen Wasserbasislacks weist keine Besonderheiten auf, sondern erfolgt in üblicher und bekannter Weise durch Vermischen der vorstehend beschriebenen Bestandteile in geeigneten Mischaggregaten wie Rührkessel, Dissolver oder Extruder nach den für die Herstellung der jeweiligen Wasserbasislacke geeigneten Verfahren.

Der erfindungsgemäße Wasserbasislack dient der Herstellung der erfindungsgemäßen Lackierungen, insbesondere Mehrschichtlackierungen, auf grundierten oder ungrundierten Substraten.

Als Substrate kommen alle zu lackierenden Oberflächen, die durch eine Härtung der hierauf befindlichen Lackierungen unter Anwendung von Hitze nicht geschädigt werden, in Betracht; das sind z. B. die erfindungsgemäßen Formteile, Folien und Fasern, Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach ist die erfindungsgemäße Lackierung auch für Anwendungen außerhalb der Kfz-Lackierung, insbesondere Automobillackierung geeignet. Hierbei kommt sie insbesondere für die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignet sie sich fiir die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Mehrschichtlackierung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die erfindungsgemäßen Mehrschichtlackierungen können in unterschiedlicher Weise hergestellt werden.

Eine erste bevorzugte Variante des erfindungsgemäßen Verfahrens umfaßt die Verfahrensschritte:

(I) Herstellen einer Basislackschicht durch Applikation des erfindungsgemäßen Wasserbasislacks auf das Substrat,

(II) Trocknen der Basislackschicht,

(III) Herstellen einer Klarlackschicht durch Applikation eines Klarlacks auf die Basislackschicht und

(IV) gemeinsame Härtung der Basislackschicht und der Klarlackschicht, wodurch die Basislackierung und die Klarlackierung resultieren (Naß-innaß-Verfahren).

Diese Variante bietet insbesondere bei der Lackierung von Kunststoffen besondere Vorteile und wird deshalb hier besonders bevorzugt angewandt.

Eine zweite bevorzugte Variante des erfindungsgemäßen Verfahrens umfaßt die Verfahrensschritte:

(I) Herstellen einer Füllerlackschicht durch Applikation eines Füllers auf das Substrat,

(II) Härtung der Füllerlackschicht, wodurch die Füllerschicht resultiert,

(III) Herstellen einer Basislackschicht durch Applikation des erfindungsgemäßen Wasserbasislacks auf die Füllerschicht,

(IV) Trocknen der Basislackschicht,

(V) Herstellen einer Klarlackschicht durch Applikation eines Klarlacks auf die Basislackschicht und

(VI) gemeinsame Härtung der Basislackschicht und der Klarlackschicht, wodurch die Basislackierung und die Klarlackierung resultieren (Naß-innaß-Verfahren).

Eine dritte bevorzugte Variante des erfindungsgemäßen Verfahrens umfaßt die Verfahrensschritte:

(I) Herstellen einer Füllerlackschicht durch Applikation eines Füllers auf das Substrat,

(II) Trocknen der Füllerlackschicht,

(III) Herstellen einer Basislackschicht durch Applikation des erfindungsgemäßen Wasserbasislacks auf die Füllerlackschicht,

(IV) Trocknen der Basislackschicht,

(V) Herstellen einer Klarlackschicht durch Applikation eines Klarlacks auf die Basislackschicht und

(VI) gemeinsame Härtung der Füllerlackschicht, der Basislackschicht und der Klarlackschicht, wodurch die Basislackierung und die Klarlackierung resultieren (erweitertes Naß-in-naß-Verfahren).

Die beiden letztgenannten Varianten bieten insbesondere bei der Lackierung von Automobilkarosserien besondere Vorteile und werden deshalb hier ganz besonders bevorzugt angewandt.

Hierbei zeigt sich als weiterer besonderer Vorteil des erfindungsgemäßen Wasserbasislacks und des erfindungsgemäßen Verfahrens, daß näich sämtliche üblichen und bekannten Klarlacke im Rahmen der erfindungsgemäßen Verfahren mit der erfindungsgemäßen Wasserbasislackschicht kombiniert werden können.

Beispiele geeigneter bekannter Einkomponenten(1K)-, Zweikomponenten(2K)-oder Mehrkomponenten(3K, 4K)-Klarlacke sind aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. US-A-5,474,811, US-A-5,356,669, US-A-5,605,965, WO 94/10211, WO 94/10212, WO 94/10213, EP-A-0 594 068, EP-A-0 594 071 oder EP-A-0 594 142).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor.

Darüber hinaus können die Klarlackierungen noch zusätzlich mit mindestens einer weiteren Klarlackierung, beispielsweise einer organisch modifizierten Keramikschicht, beschichtet sein, wodurch die Kratzfestigkeit der erfindungsgemäßen Mehrschichtlackierung signifikant verbessert werden kann.

Demzufolge können die erfindungsgemäßen Mehrschichtlackierungen einen unterschiedlichen Aufbau aufweisen.

In einer ersten bevorzugten Variante der erfindungsgemäßen Mehrschichtlackierung liegen

(1) eine mechanische Energie absorbierende Füllerschicht,

(2) die farb- und/oder effektgebende Basislackierung und

(3) eine Klarlackierung

in der angegebenen Reihenfolge übereinander.

In der zweiten bevorzugten Variante der erfindungsgemäßen Mehrschichtlackierung liegen

(1) eine farb- und/oder effektgebende Basislackierung und

(2) eine Klarlackierung

in der angegebenen Reihenfolge übereinander. Diese bevorzugte Variante wird insbesondere bei der Kunststofflackierung angewandt.

Die Applikation des erfindungsgemäßen Wasserbasislacks kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substraten als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikationen kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Wasserbasislacks und seines gegebenenfalls wiederaufzubereitenden Overspray eintreten. So kann das Heißspritzen so ausgestaltet sein, daß der Wasserbasislack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium fiir den Overspray, z. B. dem Wasserbasislack selbst, betrieben wird.

Im allgmeinen werden die Füllerlackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 15 bis 120, besonders bevorzugt 10 bis 100 und insbesondere 10 bis 90 $\mu$m, im Falle der Basislackierung liegt sie bei 5 bis 50, vorzugsweise 5 bis 40, besonders bevorzugt 5 bis 30 und insbesondere 10 bis 25 $\mu$m, und im Falle der Klarlackierungen liegt sie bei 10 bis 100, vorzugsweise 15 bis 80, besonders bevorzugt 20 bis 70 und insbesondere 25 bis 60 $\mu$m.

Die Füllerlackschicht, Basislackschicht und Klarlackschicht werden thermisch gehärtet.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte <10g Wasser/kg Luft, insbesondere <5g Wasser/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100 °C, besonders bevorzugt 80 bis 100 °C und insbesondere 90 bis 100 ° C während einer Zeit von 1 min bis zu 2 h, besonders bevorzugt 2 min bis zu 1 h und insbesondere 3 min bis 30 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 155 °C nicht zu überschreiten.

Im Falle der Klarlackierungen kann die Härtung je nach verwendetem Klarlack auch mit aktinischer Strahlung oder thermisch und mit aktinischer Strahlung (Dual Cure) erfolgen. Als aktinische Strahlung kommt elektromagnetische Strahlung wie nahes Infrarotlicht (NIR), sichtbares Licht, UV-Strahlung oder Röntgenstrahlung und/oder Korpuskularstrahlung wie Elektronenstrahlung in Betracht.

Die erfindungsgemäßen Mehrschichtlackierungen weisen ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen die vom Markt geforderte hohe optische Qualität und Zwischenschichthaftung auf und werfen keine Probleme wie mangelnde Schwitzwasserbeständigkeit der Füllerschichten, Rißbildung (mudcracking) in den Basislackierungen oder Verlaufsstörungen oder Oberflächenstrukturen in den Klarlackierungen auf.

Insbesondere weisen die erfindungsgemäße Mehrschichtlackierung einen hervorragenden Metallic-Effekt, einen hervorragenden D.O.I. (distinctiveness of the reflected image) und eine hervorragende Oberflächenglätte, auf. Sie sind witterungsstabil, resistent gegenüber Chemikalien und Vogelkot und kratzfest und zeigt ein sehr gutes Reflow-Verhalten.

Nicht zuletzt erweist es sich aber als ganz besonderer Vorteil, daß durch die Verwendung der erfindungsgemäßen Wasserbasislacke bei der Herstellung der erfindungsgemäßen Mehrschichtlackierungen keine oder nur noch kaum sichtbare optische Fehlstellen resultieren.

Demzufolge weisen auch die hiermit beschichteten Substrate besondere Vorteile wie eine längere Gebrauchsdauer, einen besseren ästhetischen Eindruck beim Betrachter und eine bessere technologische Verwertbarkeit auf, was sie wirtschaftlich besonders attraktiv macht.

**Beispiele und Vergleichsversuche**

**Herstellbeispiel 1**

**Die Herstellung einer wäßrigen Polyurethandispersion (A)**

716,6 Gewichtsteile eines Kondensationproduktes (zahlenmittleres Molekulargewicht: 1410) aus 1,81 Mol einer polymeren Fettsäure (Dimerengehalt mindestens 98 Gew.-%, Trimerengehalt höchstens 2,0 Gew.-%, Monomerengehalt höchstens Spuren), 0,82 Mol Isophthalsäure, 0,61 Mol Hexandiol und 0,61 Mol Neopentylglykol, 61 Gewichtsteile Dimethylolpropionsäure, 10,6 Gewichtsteile Neopentylglykol, 365 Gewichtsteile Methylethylketon und 308,3 Gewichtsteile m-Tetramethylxylylidendiisocyanat wurden in einem geeigneten Reaktionsgefäß unter Rühren unter einer Stickstoffatmosphäre auf 80 Grad Celsius erhitzt. Die Reaktion wurde bis zu einem Isocyanatgehalt von 1,1 Gew.-%, bezogen auf die Gesamtmenge des Reaktionsgemischs, fortgeführt. Anschließend wurden 52,6 Gewichtsteile Trimethylolpropan hinzugegeben, wonach die resultierende Reaktionsmischung so lange bei 80 Grad Celsius gerührt wurde, bis keine freien Isocyanatgruppen mehr nachweisbar waren. Danach wurden langsam 33 Gewichtsteile Dimethylethanolamin, 255 Gewichtsteile Butylglykol und anschließend 2153 Gewichtsteile deionisiertes Wasser eingerührt. Das Methylethylketon wurde unter Vakuum abdestilliert. Es resultierte eine feinteilige Dispersion, deren pH-Wert mit Dimethylethanolamin auf 7,4 und deren nicht flüchtiger Anteil mit deionisiertem Wasser auf 31 Gew.-% eingestellt wurden.

**Herstellbeispiel 2**

**Die Herstellung einer wäßrigen Polyesterharzlösung (I)**

In einem Reaktor, ausgerüstet mit Rührer, Thermometer und Füllkörperkolonne, wurden 729 Gewichtsteile Neopentylglykol, 768 Gewichtsteile Hexandiol, 462 Gewichtsteile Hexahydrophthalsäureanhydrid und 1710 Gewichtsteile einer polymeren Fettsäure (Dimerengehalt mindestens 98 Gew.-%, Trimerengehalt höchstens 2 Gew.-%, Monomerengehalt höchstens Spuren) eingewogen und zum Schmelzen gebracht. Die resultierende Schmelze wurde unter Rühren so aufgeheizt, daß die Kolonnenkopftemperatur 100 Grad Celsius nicht überstieg. Es wurde bei maximal mit 220 Grad Celsius so lange verestert, bis eine Säurezahl von 9 erreicht war. Nachdem Abkühlen auf 180 Grad Celsius wurden 768 Gewichtsteile Trimellithsäureanhydrid zugegeben und weiter verestert, bis eine Säurezahl von 32 erreicht war. Danach wurde die Reaktionsmischung auf 120 Grad Celsius abgekühlt und mit 1392 Gewichtsteilen Butylglykol angelöst. Nachdem Abkühlen auf 90 Grad Celsius wurden langsam 158 Gewichtsteile Dimethylethanolamin und anschließend 1150 Gewichtsteile deionisiertes Wasser eingerührt. Die resultierende Polyesterharzlösung wurde mit Dimethylethanolamin auf einen pH-Wert 7,6 und mit deionisiertem Wasser auf einen nichtflüchtigen Anteil von 60 Gew.-% eingestellt.

**Herstellbeispiel 3**

**Die Herstellung eines Polyacrylatharzes (H)**

500 Gewichtsteile eines Kondensationsproduktes (zahlenmittleres Molekulargewicht: 1423) aus 1,0 Mol einer polymeren Fettsäure (Dimerengehalt mindestens 98 Gew.-%, Dimerengehalt höchstens 2,0 Gew.-%, Monomerengehalt höchsten Spuren), 1,5 Mol Isophthalsäure, 1,6 Mol Neopentylglykol und 1,7 Mol Hexandiol, 31,2 Gewichtsteile Neopentylglykol, 185 Gewichtsteile Methylethylketon, 201,7 Gewichtsteile m-Tetramethylxylylidendiisocyanat und 0,7 Gewichtsteile Dibutylzinndilaurat wurden unter Rühren unter einer Stickstoffatmosphäre auf 80 Grad Celsius erhitzt. Die Reaktion wurde bis zu einem Isocyanatgehalt von 1,3 Gew.-%, bezogen auf die Gesamtmenge des Reaktionsgemischs, fortgeführt. Danach wurden 30 Gewichtsteile Diethanolamin zugegeben, und die resultierende Reaktionsmischung wurde bei

80 Grad Celsius so lange gerührt, bis keine Isocyanatgruppen mehr nachweisbar waren. Anschließend wurden 466 Gewichtsteile Butylglykol eingerührt, wonach das Methylethylketon im Vakuum abdestilliert wurde. Die resultierende Polyurethanlösung wurde anschließend mit Butylglykol auf einen nichtflüchtigen Anteil von 60 Gew.-% eingestellt.

In einem Stahlkessel, ausgerüstet mit Monomerenzulauf, Initiatorzulauf, Thermometer, Ölheizung und Rückflußkühler wurden 28,44 Gewichtsteile Butylglykol und 24,24 Gewichtsteile der oben genannten Polyurethanlösung vorgelegt und auf 110 Grad Celsius aufgeheizt. Dann wurde eine Lösung von 5,1 Gewichtsteilen t-Butylperethylhexanoat in 6,0 Gewichtsteilen Butylglykol in einer solchen Geschwindigkeit gleichmäßig zugegeben, daß die Zugabe nach 5,5 Stunden abgeschlossen war. Mit dem Beginn der Initiatorzugabe wurde auch mit der Zugabe einer Mischung aus 18,36 Gewichtsteilen n-Butylmethacrylat, 17 Gewichtsteilen Methylmethacrylat, 17 Gewichtsteilen Laurylmethacrylat, 17,34 Gewichtsteilen Hydroxypropylacrylat und 12,75 Gewichtsteilen Styrol begonnen. Das Monomerengemisch wurde mit einer solchen Geschwindigkeit gleichmäßig zugegeben, daß die Zugabe in fünf Stunden abgeschlossen war. Nach dem die Initiatorlösung vollständig zugegeben war, wurde die Reaktionstemperatur noch während einer Stunde auf 110 Grad Celsius gehalten.

Im Anschluß daran wurde eine Lösung von 1,17 Gewichtsteilen t-Butylperethylhexanoat in 3,5 Gewichtsteilen Butylglykol in einer solchen Geschwindigkeit gleichmäßig zugegeben, daß die Zugabe nach 1,5 Stunden abgeschlossen war. Mit dem Beginn der Zugabe der Initiatorlösung wurde auch mit der Zugabe einer Mischung aus 5,85 Gewichtsteilen Acrylsäure und 4,65 Gewichtsteilen n-Butylmethacrylat, 2,94 Gewichtsteilen Methylmethacrylat, 5,90 Gewichtsteilen Laurylmethacrylat, 1,25 Gewichtsteilen Hydroxypropylacrylat und 2,94 Gewichtsteilen Styrol begonnen. Das Monomerengemisch wurde mit einer solchen Geschwindigkeit gleichmäßig zugegeben, daß die Zugabe innerhalb einer Stunde abgeschlossen war. Hiernach wurde die Temperatur des Reaktionsgemischs noch während 1,5 Stunden auf 110 Grad Celsius gehalten. Die resultierende Harzlösung wurde destillativ unter Vakuum auf 80 Gew.-% Festkörpergehalt aufkonzentriert und mit Dimethylethanolamin bei dieser Temperatur innerhalb von 30 Minuten bis zu einem Neutralisationsgrad von 80% neutralisiert. Die Harzlösung wurde auf 60 Grad Celsius abgekühlt, wonach die Heizung abgestellt wurde. Anschließend wurde langsam Wasser hinzugegeben, bis der Feststoffgehalt der Dispersion bei 40 Gew.-% lag. Die Dispersion wies eine Säurezahl von 36,7 mg KOH/g und einen pH-Wert von 7,6 auf.

**Beispiele 1 und 2 und Vergleichsversuche V1 und V2**

**Die Herstellung erfindungsgemäßer (Beispiele 1 und 2) und nicht erfindungsgemäßer (Vergleichsversuche V1 und V2) Wasserbasislacke**

Die Herstellungen der erfindungsgemäßen Wasserbasislacke der Beispiele 1 und 2 und des nicht erfindungsgemäßen Wasserbasislacks des Vergleichsversuchs V2 wurden analog der nachstehend angegebenen Herstellvorschrift für den nicht erfindungsgemäßen Wasserbasislack des Vergleichsversuchs V1 durchgeführt. Die Tabelle 1 gibt eine Übersicht über die angewandten Mengen der Ausgangsprodukte.

Für den Vergleichsversuch V1 wurde das Verdickungsmittel 1 (Paste eines synthetischen Natrium-Magnesium-Schichtsilikats der Firma Laporte; 3 %ig in Wasser) vorgelegt. Hierzu wurden unter Rühren deionisiertes Wasser, Verdickungsmittel 3 (3% ige wäßrige Lösung einer Polyacrylsäure der Firma Allied Colloids; Handelsname:Viscalex), die Polyurethandispersion (A) gemäß Herstellbeispiel 1, die Polyesterharzlösung (I) gemäß Herstellbeispiel 2, die Lösung des Polyacrylats (H) gemäß Herstellbeispiel 3, Butylglykol, ein handelsübliches Melaminharz in Butanol (Maprenal® VMF3924), eine Siliziumdioxid enthaltende Füllstoffpaste (12 Gewichtsteile Syloid® ED-3 der Firma Grace; 30 Gewichtsteile der oben genannten Polyesterharzlösung (I)), ein Neutralisationsmittel (D) (Dimethylethanolamin, 10 %ig in Wasser), eine Lösung eines handelsüblichen Entschäumers auf Alkindiol-Basis (50%ig in Butylglykol; Firma Air Products), deionisiertes Wasser, eine Pigmentpaste 1 (63 Gewichtsteile Polyurethandispersion, 31 Gewichtsteile Titan Rutil Tayca® MT500HD der Firma Tayca), eine Pigmentpaste 2 (64 Gewichtsteile Polyurethandispersion und 32 Gewichtsteile Titandioxid UVL 530 der Firma Kemira) hinzugegeben.

Getrennt hiervon wurde eine Aluminiumpigmentaufschlämmung aus 5,0 Gewichtsteilen einer handelsüblichen Aluminiumpaste (Alu-Stapa-Hydrolux® 2192 der Firma Eckart), 6,0 Gewichtsteilen Lösemittel und 2,4 Gewichtsteilen der Polyesterharzlösung (I) hergestellt. Diese Aluminiumpigmentaufschlämmung wurde in die vorstehend beschriebene Mischung eingerührt.

Anschließend wurde die resultierende Mischung mit der Neutralisationslösung (D) auf einen pH-Wert etwa 8,0 und mit deionisiertem Wasser auf eine Viskosität von 65 mPas bei einem Scherung von $1291 s^{-1}$ eingestellt.

Für den Vergleichsversuch V2 wurde der Vergleichsversuch V1 wiederholt, nur daß anstelle des Verdickungsmittels 1 das Verdickungsmittel 2 verwendet wurde. Bei diesem handelt es sich um eine 3%ige Lösung eines synthetischen Natrium-Magnesium-Schichtsilikats der Firma Südchemie.

Für das Beispiel 1 wurde der Vergleichsversuch V1 wiederholt, nur daß anstelle des Verdickungsmittels 3 das Verdickungsmittel 4 verwendet wurde. Bei diesem handelt es sich um eine Mischung aus 50 Gew.-% eines assoziativen Verdickungsmittels auf Polyurethanbasis (G) (Nopco® DSX1550 der Firma Henkel) und 50 Gew.-% Butylglykol.

Für das Beispiel 2 wurde Beispiel 1 wiederholt, nur das anstelle von Butylglykol bei der Herstellung der Aluminiumpigmentaufschlämmung Dipropylenglykolmonoalkylether verwendet wurde.

Auch die Wasserbasislacke des Vergleichsversuchs V2 und der Beispiele 1 und 2 wurde mit der Neutralisationslösung (D) auf einen pH-Wert etwa 8,0 und mit deionisiertem Wasser auf eine Viskosität von 65 mPas bei einem Scherung von 1291$s^{-1}$ eingestellt.

Die Tabelle 1 gibt eine Übersicht über die Mengen der Ausgangsprodukte und die Zusammensetzung der Wasserbasislacke.

Tabelle 1:

| **Die Zusammensetzung der erfindungsgemäßen (Beispiele 1 und 2) und der nicht erfindungsgemäßen (Vergleichsversuch V1 und V2) Wasserbasislacke** | | | | |
|---|---|---|---|---|
| **Bestandteile** | **Vergleichsversuche:** | | **Beispiele:** | |
| | **V1** | **V2** | **1** | **2** |
| Verdickungsmittel 1 | 29 | - | 29 | 29 |
| Verdickungsmittel 2 | - | 29 | - | - |
| Deionisiertes Wasser | 9,0 | 9,0 | 9,0 | 9,0 |
| Verdickungsmittel 3 | 5,5 | 5,5 | - | - |
| Polyurethandispersion (A) | 21,5 | 21,5 | 21,5 | 21,5 |
| Polyesterlösung (I) | 2,0 | 2,0 | 2,0 | 2,0 |
| Polyacrylatharzlösung (H) | 5,0 | 5,0 | 5,0 | 5,0 |
| Butylglykol | 2,0 | 2,0 | 2,0 | 2,0 |
| Melaminharz (B) | 5,0 | 5,0 | 5,0 | 5,0 |
| Füllstoffpaste | 1,2 | 1,2 | 1,2 | 1,2 |
| Neutralisationsmittel (D) | 0,4 | 0,4 | 0,4 | 0,4 |
| Entschäumungsmittel | 2,0 | 2,0 | 2,0 | 2,0 |
| Verdickungsmittel 4 | - | - | 1,6 | 1,6 |
| Deionisiertes Wasser | 4,0 | 4,0 | 4,0 | 4,0 |
| Pigmentpaste 1 | 4,3 | 4,3 | 4,3 | 4,3 |
| Pigmentpaste 2 | 0,8 | 0,8 | 0,8 | 0,8 |
| Alu-Stapa-Hydrolux® | 5,0 | 5,0 | 5,0 | 5,0 |
| Butylglykol | 6,0 | 6,0 | 6,0 | - |
| Dipropylenglykol-Methylether | - | - | - | 6, 0 |
| Polyesterlösung (I) | 2,4 | 2,4 | 2,4 | 2,4 |

Das Viskositätsverhalten der erfindungsgemäßen (Beispiele 1 und 2) und der nicht erfindungsgemäßen (Vergleichsversuche V1 und V2) Wasserbasislacke wurde bei unterschiedlichen Scherraten ermittelt. Die Ergebnisse finden sich in der Tab. 2.

Tabelle 2:

| **Das Viskositätsverhalten der erfindungsgemäßen (Beispiele 1 und 2) und der nicht erfindungsgemäßen (Vergleichsversuche V1 und V2) Wasserbasislacke** | | | | |
|---|---|---|---|---|
| **Scherrate ($s^{-1}$)** | **Viskosität (mPas):** | | | |
| | **Vergleichsversuche:** | | **Beispiele:** | |
| | **V1** | **V2** | **1** | **2** |
| 34 (Hinkurve) | 360 | 220 | 355 | 350 |
| 1.000 | 73 | 73 | 73 | 73 |
| 34 (Rückkurve) | 250 | 180 | 245 | 235 |

Die Werte der Tabelle 2 belegen, daß die Wasserbasislacke der Beispiele 1 und 2 und der Vergleichsversuche V1 und V2 ein vergleichbares (Vergleichsversuch V2 einerseits und Beispiele 1 und 2 und Vergleichsversuch V1 andererseits) bzw. identisches Viskositätsverhalten (Beispiele 1 und 2 und Vergleichsversuch V1) aufwiesen.

**Beispiele 3 und 4 und Vergleichsversuche V3 und V4**

**Prüfung der erfindungsgemäßen (Beispiele 3 und 4) und der nicht erfindungsgemäßen (Vergleichsversuche V3 und V4) Wasserbasislacke auf ihre Wirkung gegen die Bildung optischer Fehlstellen**

Für das Beispiel 3 wurde der erfindungsgemäße Wasserbasislack des Beispiels 1 verwendet.
Für das Beispiel 4 wurde der erfindungsgemäße Wasserbasislack des Beispiels 2 verwendet.
Für den Vergleichsversuch V3 wurde der nicht erfindungsgemäße Wasserbasislack des Vergleichsversuchs V1 verwendet.
Für den Vergleichsversuch V4 wurde der nicht erfindungsgemäße Wasserbasislack des Vergleichsversuchs V2 verwendet.
Die Prüftafeln der Beispiele 3 und 4 und der Vergleichsversuch V3 und V4 wurden nach der folgenden allgemeinen Vorschrift hergestellt:
Auf mit einem handelsüblichen Elektrotauchlack kathodisch beschichteten Stahltafeln (Elektrotauchlackierung mit einer Schichtdicke von 18 - 22 μm) wurde mit einer Becherpistole zunächst ein handelsüblicher Füller von BASF Coatings AG appliziert und eingebrannt. Es resultierte ein Füller mit einer Schichtdicke von 35 bis 40 μm. Anschließend wurden auf den Füller in gleicher Weise die erfindungsgemäßen und die nicht erfindungsgemäßen Wasserbasislacke (vgl. Tabelle 1) appliziert und während 10 min bei 80 °C vorgetrocknet. Nach dem Kühlen der Tafeln wurde jeweils eine Schicht aus einem handelsüblichen Zweikomponenten-High-Solid-Klarlack der Firma DuPont aufgetragen und während 10 min bei Raumtemperatur vorgetrocknet und anschließend während 45 min bei 140 °C zusammen mit den Basislacken vernetzt. Es resultierten Basislackierungen einer Stärke von 15 μm und Klarlackierungen einer Stärke von 44 μm.

**1. Helle Flecken**

Bei dem Naßschliff von Fehlstellen einer Erstlackierung oder eines Füllers verbleiben Wassertropfen auf den Teilen der Karosserie, die mit Basislack und Klarlack überschichtet werden sollen. Diese Wassertropfen bestehen aus Wasser, Schleifstaub von Klarlack und/oder Füller und Rückständen des Schleifpapieres. Nach dem Trocknen dieser Wassertropfen und einer anschließenden Beschichtung mit dem Basislack und dem Klarlack sind die Stellen des eingetrockneten Wassers als helle Recken sichtbar.
Zur Simulation dieses Effekts wurden Schleifwassertropfen (deionisiertes Wasser + Schleifstaub von Füller und Klarlack + darin eingeweichtes Schleifpapier der Firma Plochmann) unterschiedlicher Größe auf die jeweiligen Prüftafeln aufgebracht, bei Raumtemperatur getrocknet und mit den jeweiligen für die Erstiackierung angewandten, in der Tabelle 1 beschriebenen Basislacken und dem Zweikomponenten-High-Solid-Klarlack der Firma DuPont beschichtet. Die resultierenden Farbtonunterschiede in den Beschichtungen (helle Flecken) wurden visuell beurteilt. Die erhaltenen Ergebnisse finden sich in der Tabelle 3.

**2. Polierflecken**

Auf den Prüftafeln wurden mittels eines rot/weißen Filzes ("Buffing Pad" der Firma 3M, Material Nr. 049-5765) und der grauen Polierpaste der Firma 3M (Material Nr. 029-2778) Polierstellen erzeugt. Bei der anschließenden Beschichtung mit den in der Tabelle 1 beschriebenen Basislacken und dem o.g. Klarlack waren diese Polierstellen wegen ihres anderen Farbtons deutlich zu sehen. Der jeweilige Farbtonunterschied wurde visuell ermittelt. Die erhaltenen Ergebnisse finden sich in der Tabelle 3.

**3. Schleifflecken**

Auf den Prüftafeln wurden mittels eines Schleifpapieres der Firma Plochmann mit einer Körnung von 2.000 sowohl eine Runde als auch eine kreuzförmige Schleifstelle aufgebracht. Diese Schleifstellen wurden mit den in der Tabelle 1 beschriebenen Basislacken und dem o.g. Klarlack beschichtet. Der jeweilige Farbtonunterschied wurde visuell ermittelt. Die erhaltenen Ergebnisse finden sich in der Tabelle 3.
Der Farbtonunterschied, d. h. die Auffälligkeit der Fehlstellen, wurde wie folgt benotet:

**Note Bedeutung**

1 Fehlstellen nicht sichtbar
2 Fehlstellen sehr schwach sichtbar
3 Fehlstellen schwach sichtbar
4 Fehlstellen deutlich sichtbar
5 Fehlstellen sehr deutlich sichtbar

Tabelle 3:

| Der Einfluß der erfindungsgemäßen (Beispiele 3 und 4) und der nicht erfindungsgemäßen (Vergleichsversuche V3 und V4) Wasserbasislacke auf die Bildung optischer Fehlstellen | | | | |
|---|---|---|---|---|
| **Optische Fehlstellen** | **Vergleichsversuche:** | | **Beispiele:** | |
| | **V3** | **V4** | **3** | **4** |
| Helle Flecken | 4 | 5 | 2 | 2 |
| Polierflecken | 4 | 5 | 4 | 2-3 |
| Schleifflecken | 3-4 | 4 | 2-3 | 2 |

Die Ergebnisse belegen, daß sich mit Hilfe der erfindungsgemäßen Wasserbasislacke die Bildung optischer Fehlstellen wirksam unterdrücken läßt.

Eine zusätzliche Verbesserung resultiert aus der Verwendung von Dipropylenglykolmonoalkylether. Der Vergleich der Ergebnisse in Tabelle 3 mit dem in der Tabelle 2 im Überblick dargestellten Viskositätsverhalten der Wasserbasislacke untermauert, daß letzteres für die vorteilhafte Wirkung der erfindungsgemäßen Wasserbasislacke überraschenderweise nicht verantwortlich ist.

## Patentansprüche

**1.** Verwendung von assoziativen Verdickungsmitteln auf Polyurethanbasis und/oder von Dipropylenglykolmonoalkylethern zur Unterdrückung optischer Fehlstellen in farb- und/oder effektgebenden Mehrschichtlackierungen oder deren Reparaturlackierungen.

**2.** Die Verwendung nach Anspruch 1, **dadurch gekennzeichnet, daß** die farb- und/oder effektgebende Mehrschichtlackierung und/oder deren Reparaturlackierung mindestens eine Basislackierung und mindestens eine Klarlackierung aufweist oder aufweisen.

**3.** Die Verwendung nach Anspruch 2, **dadurch gekennzeichnet, daß** die Basislackierung aus einem Wasserbasislack hergestellt wird.

**4.** Die Verwendung nach Anspruch 3, **dadurch gekennzeichnet, daß** es sich um einen Wasserbasislack auf Polyurethanbasis handelt.

**5.** Die Verwendung nach einem der Ansprüche 2 bis 4, **dadurch gekennzeichnet, daß** das assoziative Verdickungsmittel auf Polyurethanbasis und/oder Dipropylenglykolmonoalkylether in dem oder den Basislacken enthalten ist oder sind.

**6.** Die Verwendung nach einem der Ansprüche 2 bis 5, **dadurch gekennzeichnet**, das assoziative Verdickungsmittel auf Polyurethanbasis und Dipropylenglykolmonoalkylether in dem oder den Basislacken enthalten sind.

**7.** Die Verwendung nach einem der Ansprüche 1 bis 5, **dadurch gekennzeichnet, daß** es sich bei den optischen Fehlstellen um

- helle Flecken, hervorgerufen von eingetrockneten Flüssigkeitsresten und/oder Schleifstaubresten, die nach dem Schliff von Fehlstellen einer farb- und/oder effektgebenden Mehrschichtlackierung oder einem mit einer farb- und/oder effektgebenden Mehrschichtlackierung zu beschichtenden Füller hierauf zurückbleiben; und

- Polierflecken, hervorgerufen von der Polierung von Fehlstellen einer farb- und/oder effektgebenden Mehrschichtlackierung, die zwecks Reparatur der farb- und/oder effektgebenden Mehrschichtlackierung vorgenommen wird;

handelt.

**8.** Die Verwendung nach einem der Ansprüche 3 bis 7, **dadurch gekennzeichnet, daß** der Wasserbasislack

(A) mindestens ein in Wasser lösliches oder dispergierbares Polyurethan,
(B) mindestens ein Vernetzungsmittel,
(C) mindestens ein farb- und/oder effektgebendes Pigment,
(D) mindestens ein Neutralisationsmittel,
(E) mindestens ein anorganisches Verdickungsmittel und
(F) mindestens einen Dipropylenglykolmonoalkylether

enthält.

**9.** Die Verwendung nach Anspruch 8, **dadurch gekennzeichnet, daß** der Wasserbasislack,

(G) mindestens ein assoziatives Verdickungsmittel auf Polyurethanbasis

enthält.

**10.** Die Verwendung nach einem der Ansprüche 3 bis 7, **dadurch gekennzeichnet, daß** der Wasserbasislack

(A) mindestens ein in Wasser lösliches oder dispergierbares Polyurethan,
(B) mindestens ein Vernetzungsmittel,
(C) mindestens ein farb- und/oder effektgebendes Pigment,
(D) mindestens ein Neutralisationsmittel,
(E) mindestens ein anorganisches Verdickungsmittel,
(G) mindestens ein assoziatives Verdickungsmittel auf Polyurethanbasis,
(H) gegebenenfalls mindestens ein in Wasser lösliches oder dispergierbares, in der Gegenwart eines in Wasser löslichen oder dispergierbaren Polyurethans hergestelltes Polyacrylatharz und
(I) mindestens ein in Wasser lösliches oder dispergierbares Polyesterharz

enthält.

**11.** Die Verwendung nach Anspruch 10, **dadurch gekennzeichnet, daß** der Wasserbasislack

(F) mindestens einen Dipropylenglykolmonoalkylether

enthält.

**12.** Die Verwendung nach einem der Ansprüche 8, 9 oder 11, **dadurch gekennzeichnet, daß** der Wasserbasislack, bezogen auf sein Gesamtgewicht, 0,5 bis 11 Gew.-% Dipropylenglykolmonoalkylether (F) enthält.

**13.** Die Verwendung nach einem der Ansprüche 9 bis 12, **dadurch gekennzeichnet, daß** der Wasserbasislack, bezogen auf sein Gesamtgewicht, 0,1 bis 4 Gew.-% mindestens eines assoziative Verdickungsmittels auf Polyurethanbasis (G) enthält.

**14.** Die Verwendung nach einem der Ansprüche 3 bis 13, **dadurch gekennzeichnet, daß** der Wasserbasislack

(J) mindestens ein Additiv

enthält.

**15.** Wasserbasislack, enthaltend

(A) mindestens ein in Wasser lösliches oder dispergierbares Polyurethan,
(B) mindestens ein Vernetzungsmittel,
(C) mindestens ein farb- und/oder effektgebendes Pigment,
(D) mindestens ein Neutralisationsmittel,
(E) mindestens ein anorganisches Verdickungsmittel und
(F) mindestens einen Dipropylenglykolmonoalkylether.

**16.** Der Wasserbasislack nach Anspruch 15, **dadurch gekennzeichnet, daß** er

(G) mindestens ein assoziatives Verdickungsmittel auf Polyurethanbasis

enthält.

**17.** Wasserbasislack, enthaltend

(A) mindestens ein in Wasser lösliches oder dispergierbares Polyurethan mit funktionellen Gruppen (a2), die durch Neutralisationsmittel in Anionen überführt werden können, und/oder anionische Gruppen, insbesondere Carbonsäure- und/oder Carboxylatgruppen,
(B) mindestens ein Vernetzungsmittel,
(C) mindestens ein farb- und/oder effektgebendes Pigment,
(D) mindestens ein Neutralisationsmittel,
(E) mindestens ein anorganisches Verdickungsmittel,
(G) mindestens ein assoziatives Verdickungsmittel auf Polyurethanbasis,
(H) gegebenenfalls mindestens ein in Wasser lösliches oder dispergierbares, in der Gegenwart eines in Wasser löslichen oder dispergierbaren Polyurethans hergestelltes Polyacrylatharz und
(I) mindestens ein in Wasser lösliches oder dispergierbares Polyesterharz.

**18.** Der Wasserbasislack nach Anspruch 17, **dadurch gekennzeichnet, daß** er

(F) mindestens einen Dipropylenglykolmonoalkylether

enthält.

**19.** Der Wasserbasislack nach einem der Ansprüche 15, 16 oder 18, **dadurch gekennzeichnet, daß** er, bezogen auf sein Gesamtgewicht, 0,5 bis 11 Gew.-% Dipropylenglykolmonoalkylether enthält.

**20.** Der Wasserbasislack nach einem der Ansprüche 16 bis 19, **dadurch gekennzeichnet, daß** er bezogen auf sein Gesamtgewicht, 0,1 bis 4 Gew.-% mindestens eines assoziativen Verdickungsmittels auf Polyurethanbasis enthält.

**21.** Der Wasserbasislack nach einem der Ansprüche 15 bis 20, **dadurch gekennzeichnet, daß** er

(J) mindestens ein Additiv

enthält.

**22.** Die Verwendung des Wasserbasislacks nach einem der Ansprüche 15 bis 21 für die Erstbeschichtung von Kraftfahrzeugkarosserien, industriellen Bauteilen, inklusive elektrotechnische Bauteile, Coils und Emballagen, Kunststoffen oder Möbel oder für die Reparaturlackierung von hierauf befindlichen farb- und/oder effektgebenden Mehrschichtlackierungen.

**23.** Farb- und/oder effektgebende Mehrschichtlackierungen, enthaltend mindestens eine Basislackierung, herstellbar aus einem Wasserbasislack gemäß einem der Ansprüche 15 bis 21.

## Claims

**1.** Use of polyurethane-based associative thickeners and/or dipropylene glycol monoalkyl ethers for suppressing optical defects in multicoat color and/or effect paint systems or their refinishes.

2. The use as claimed in claim 1, **characterized in that** the multicoat color and/or effect paint system and/or its refinish comprise or comprises at least one basecoat and at least one clearcoat.

3. The use as claimed in claim 2, **characterized in that** the basecoat is produced from an aqueous basecoat material.

4. The use as claimed in claim 3, **characterized in that** the aqueous basecoat material is polyurethane-based.

5. The use as claimed in any of claims 2 to 4, **characterized in that** the polyurethane-based associative thickener and/or dipropylene glycol monoalkyl ether is or are present in the basecoat material or materials.

6. The use as claimed in any of claims 2 to 5, **characterized in that** the polyurethane-based associative thickener and dipropylene glycol monoalkyl ether are present in the basecoat material or materials.

7. The use as claimed in any of claims 1 to 5, **characterized in that** the optical defects comprise

- light-colored spots, introduced by dried-up liquid residues and/or abrasion dust residues, which remain after the abrading of defects in a multicoat color and/or effect paint system or in a surfacer that is to be coated with a multicoat color and/or effect paint system; and
- polishing spots, induced by the polishing of defects in a multicoat color and/or effect paint system which is performed for the purpose of refinishing the multicoat color and/or effect paint system.

8. The use as claimed in any of claims 3 to 7, **characterized in that** the aqueous basecoat material comprises

(A) at least one water-soluble or -dispersible polyurethane,
(B) at least one crosslinking agent,
(C) at least one color and/or effect pigment,
(D) at least one neutralizing agent,
(E) at least one inorganic thickener, and
(F) at least one dipropylene glycol monoalkyl ether.

9. The use as claimed in claim 8, **characterized in that** the aqueous basecoat material comprises

(G) at least one polyurethane-based associative thickener.

10. The use as claimed in any of claims 3 to 7, **characterized in that** the aqueous basecoat material comprises

(A) at least one water-soluble or -dispersible polyurethane,
(B) at least one crosslinking agent,
(C) at least one color and/or effect pigment,
(D) at least one neutralizing agent,
(E) at least one inorganic thickener,
(G) at least one polyurethane-based associative thickener,
(H) if desired, at least one water-soluble or -dispersible polyacrylate resin prepared in the presence of a water-soluble or -dispersible polyurethane, and
(I) at least one water-soluble or -dispersible polyester resin.

11. The use as claimed in claim 10, **characterized in that** the aqueous basecoat material comprises

(F) at least one dipropylene glycol monoalkyl ether.

12. The use as claimed in any of claims 8, 9 and 11, **characterized in that** the aqueous basecoat material, based on its overall weight, contains from 0.5 to 11% by weight of dipropylene glycol monoalkyl ethers (F).

13. The use as claimed in any of claims 9 to 12, **characterized in that** the aqueous basecoat material, based on its overall weight, contains from 0.1 to 4% by weight of at least one polyurethane-based associative thickener (G).

14. The use as claimed in any of claims 3 to 13, **characterized in that** the aqueous basecoat material comprises

(J) at least one additive.

**15.** An aqueous basecoat material comprising

(A) at least one water-soluble or -dispersible polyurethane,
(B) at least one crosslinking agent,
(C) at least one color and/or effect pigment,
(D) at least one neutralizing agent,
(E) at least one inorganic thickener, and
(F) at least one dipropylene glycol monoalkyl ether.

**16.** The aqueous basecoat material as claimed in claim 15, **characterized in that** it comprises

(G) at least one polyurethane-based associative thickener.

**17.** An aqueous basecoat material comprising

(A) at least one water-soluble or -dispersible polyurethane having functional groups (a2) convertible into anions by neutralizing agents, and/or anionic groups, especially carboxylic acid and/or carboxylate groups,
(B) at least one crosslinking agent,
(C) at least one color and/or effect pigment,
(D) at least one neutralizing agent,
(E) at least one inorganic thickener,
(G) at least one polyurethane-based associative thickener,
(H) if desired, at least one water-soluble or -dispersible polyacrylate resin prepared in the presence of a water-soluble or -dispersible polyurethane, and
(I) at least one water-soluble or -dispersible polyester resin.

**18.** The aqueous basecoat material as claimed in claim 17, **characterized in that** it comprises

(F) at least one dipropylene glycol monoalkyl ether.

**19.** The aqueous basecoat material as claimed in any of claims 15, 16 and 18, **characterized in that** it, based on its overall weight, contains from 0.5 to 11% by weight of dipropylene glycol monoalkyl ethers.

**20.** The aqueous basecoat material as claimed in any of claims 16 to 19, **characterized in that** it, based on its overall weight, contains from 0.1 to 4% by weight of at least one polyurethane-based associative thickener.

**21.** The aqueous basecoat material as claimed in any of claims 15 to 20, **characterized in that** it comprises

(J) at least one additive.

**22.** The use of the aqueous basecoat material as claimed in any of claims 15 to 21 for the original coating of motor vehicle bodies, industrial components, including electrical components, coils, and packaging, plastics or furniture, or for the refinish of multicoat color and/or effect paint systems present thereon.

**23.** Multicoat color and/or effect paint systems comprising at least one basecoat producible from an aqueous basecoat material as claimed in any of claims 15 to 21.

**Revendications**

**1.** Utilisation d'épaississants associatifs à base de polyuréthanne, et/ou d'éthers monoalkyliques de type propylèneglycol pour la suppression de défauts optiques dans des revêtements de peinture multicouches colorés et/ou à effet ou des revêtements de peinture de réparation de ceux-ci.

**2.** Utilisation selon la revendication 1, **caractérisée en ce que** le revêtement de peinture multicouche coloré et/ou à effet et/ou le revêtement de peinture de réparation de celui-ci présente ou présentent au moins un revêtement de

peinture de base et au moins un revêtement de vernis.

**3.** Utilisation selon la revendication 2, **caractérisée en ce que** le revêtement de peinture de base est produit à partir d'une peinture de base à l'eau.

**4.** Utilisation selon la revendication 3, **caractérisée en ce qu'**il s'agit d'une peinture de base à l'eau à base de polyuréthanne.

**5.** Utilisation selon l'une quelconque des revendications 2 à 4, **caractérisée en ce que** l'épaississant associatif à base de polyuréthanne et/ou l'éther monoalkylique de dipropylèneglycol est ou sont contenus dans la ou les peintures de base.

**6.** Utilisation selon l'une quelconque des revendications 2 à 5, **caractérisée en ce que** l'épaississant associatif à base de polyuréthanne et l'éther monoalkylique de dipropylèneglycol sont contenus dans la ou les peintures de base.

**7.** Utilisation selon l'une quelconque des revendications 1 à 5, **caractérisé en ce que** les défauts optiques consistent en

- des taches claires, provoquées par des résidus de poussière de ponçage et/ou des résidus de liquide séché qui restent après le ponçage de défauts d'un revêtement de peinture coloré et/ou à effet ou d'un apprêt de garnissage destiné à être revêtu avec un revêtement de peinture multicouche coloré et/ou à effet ; et
- des taches de polissage provoquées par le polissage de défauts d'un revêtement de peinture multicouche coloré et/ou à effet, qui est effectué aux fins de réparation du revêtement de peinture multicouche coloré et/ou à effet.

**8.** Utilisation selon l'une quelconque des revendications 3 à 7, **caractérisée en ce que** la peinture de base à l'eau contient

(A) au moins un polyuréthanne soluble ou dispersable dans l'eau,
(B) au moins un agent de réticulation,
(C) au moins un pigment colorant et/ou à effet,
(D) au moins un agent de neutralisation,
(E) au moins un épaississant minéral et
(F) au moins un éther monoalkylique de dipropylèneglycol.

**9.** Utilisation selon la revendication 8, **caractérisée en ce que** la peinture de base à l'eau contient

(G) au moins un épaississant associatif à base de polyuréthanne.

**10.** Utilisation selon l'une quelconque des revendications 3 à 7, **caractérisée en ce que** la peinture de base à l'eau contient

(A) au moins un polyuréthanne soluble ou dispersable dans l'eau,
(B) au moins un agent de réticulation,
(C) au moins un pigment colorant et/ou à effet,
(D) au moins un agent de neutralisation,
(E) au moins un épaississant minéral,
(G) au moins un épaississant associatif à base de polyuréthanne,
(H) éventuellement au moins une résine polyacrylate soluble ou dispersable dans l'eau, préparée en présence d'un polyuréthanne soluble ou dispersable dans l'eau, et
(I) au moins une résine polyester soluble ou dispersable dans l'eau.

**11.** Utilisation selon la revendication 10, **caractérisée en ce que** la peinture de base à l'eau contient

(F) au moins un éther monoalkylique de dipropylèneglycol.

**12.** Utilisation selon l'une quelconque des revendications 8, 9 et 11, **caractérisée en ce que** la peinture de base à l'eau contient, par rapport à son poids total, de 0,5 à 11 % en poids d'éther monoalkylique de dipropylèneglycol (F).

**13.** Utilisation selon l'une quelconque des revendications 9 à 12, **caractérisée en ce que** la peinture de base à l'eau contient, par rapport à son poids total, de 0,1 à 4 % en poids d'au moins un épaississant associatif à base de polyuréthanne (G).

**14.** Utilisation selon l'une quelconque des revendications 3 à 13, **caractérisée en ce que** la peinture de base à l'eau contient*

(J) au moins un additif.

**15.** Peinture de base à l'eau contenant

(A) au moins un polyuréthanne soluble ou dispersable dans l'eau,
(B) au moins un agent de réticulation,
(C) au moins un pigment colorant et/ou à effet,
(D) au moins un agent de neutralisation,
(E) au moins un épaississant minéral et
(F) au moins un éther monoalkylique de dipropylèneglycol.

**16.** Peinture de base à l'eau selon la revendication 15, **caractérisée en ce qu'**elle contient

(G) au moins un épaississant associatif à base de polyuréthanne.

**17.** Peinture de base à l'eau contenant

(A) au moins un polyuréthanne soluble ou dispersable dans l'eau avec des groupes fonctionnels (a2) qui peuvent être convertis en anions au moyen d'agents de neutralisation, et/ou des groupes anioniques, en particulier des groupes carboxy et/ou carboxylate,
(B) au moins un agent de réticulation,
(C) au moins un pigment colorant et/ou à effet,
(D) au moins un agent de neutralisation,
(E) au moins un épaississant minéral,
(G) au moins un épaississant associatif à base de polyuréthanne,
(H) éventuellement au moins une résine polyacrylate soluble ou dispersable dans l'eau, préparée en présence d'un polyuréthanne soluble ou dispersable dans l'eau, et
(I) au moins une résine polyester soluble ou dispersable dans l'eau.

**18.** Peinture de base à l'eau selon la revendication 17, **caractérisée en ce qu'**elle contient (F) au moins un éther monoalkylique de dipropylèneglycol.

**19.** Peinture de base à l'eau selon l'une quelconque des revendications 15, 16 et 18, **caractérisée en ce qu'**elle contient, par rapport à son poids total, de 0,5 à 11 % en poids d'éther monoalkylique de dipropylèneglycol.

**20.** Peinture de base à l'eau selon l'une quelconque des revendications 16 à 19, **caractérisée en ce qu'**elle contient, par rapport à son poids total, de 0,1 à 4 % en poids d'au moins un épaississant associatif à base de polyuréthanne.

**21.** Peinture de base à l'eau selon l'une quelconque des revendications 15 à 20, **caractérisée en ce qu'**elle contient

(J) au moins un additif.

**22.** Utilisation de la peinture de base à l'eau selon l'une quelconque des revendications 15 à 21, pour le premier revêtement de carrosseries d'automobiles, de composants industriels, y compris de composants électrotechniques, de serpentins et d'emballages, de matières plastiques ou de meubles ou pour le peinturage de réparation de revêtements de peinture multicouches colorés et/ou à effet présents sur ceux-ci.

**23.** Revêtements de peinture multicouches colorés et/ou à effet, contenant au moins une couche de peinture de base, pouvant être obtenus à partir d'une peinture de base à l'eau selon l'une quelconque des revendications 15 à 21.